# EUROPEAN PATENT SPECIFICATION

(11) **EP 1 182 807 B1**
(45) Date of publication and mention of the grant of the patent: **26.12.2012**
(21) Application number: 01440282.0
(22) Date of filing: 22.08.2001
(51) Int. Cl.: H04B 10/155

(54) **Method and system for first-order RF amplitude and bias control of a modulator**
Methode und System zur RF- Amplituden- und Vorspannungskontrolle erster Ordnung für einen Modulator
Procédé et système de contrôle RF de premier ordre de l'amplitude et de la polarisation d'un modulateur

(30) Priority: 25.08.2000 US 228237 P
(43) Date of publication of application: 27.02.2002
(73) Proprietor: Alcatel Lucent, 75007 Paris (FR)
(72) Inventor: Sikora, John K., Allen, Texas 75002 (US)
(74) Representative: Wetzel, Emmanuelle

(56) References cited:
- EP-A- 0 444 688
- EP-A- 0 448 832
- WO-A2-01/33745
- JP-A- 2000 171 766
- US-A- 5 900 621

## Description

### TECHNICAL FIELD OF THE INVENTION

This invention relates generally to digital lightwave communications systems and, in particular, to methods and systems for modulating the output of a digital lightwave communications system. Even more particularly, the present invention relates to a method and system for first-order radio frequency ("RF").amplitude and bias control of a modulator.

### BACKGROUND OF THE INVENTION

US Patent 6,317,249 discloses an optical transmitter and particularly an optical transmitter including an external optical modulator such as Mach-Zehnder type optical modulator which modulates the light from a light source to output an optical signal with a drive voltage signal generated depending on an input signal.

European Patent Application EP 0 444 688 discloses an art for stabilizing the operating point suitable for an optical transmitter, especially for that including a Mach-Zehnder optical modulator. According to this art, deterioration in the waveform of the output optical signal due to the operating point drift can be prevented without depending on the input signal. Further, by performing an operating point shift under specific conditions, deterioration in the waveform due to wavelength dispersion can be prevented, whether the sign of the wavelength dispersion is positive or negative.

Document WO 01/33745 is considered to be comprised in the state of the art relevant to the question of novelty. This document discloses a control device to ensure optimum adjustement of the operating point and modulation signal of a Mach-Zehnder modulator.

One of the most important competitive characteristics of a lightwave transmission system is how large a distance can be spanned between a receiver and transmitter while maintaining the integrity of the transmitted data. Such systems can be limited by the output power of the transmitter or by the receiver performance characteristics, specifically receiver sensitivity. The method of modulating the digital output from a transmitter can also greatly influence the distance separating the transmitter from the receiver. Modulating a digital lightwave output generates the digital "1"'s and digital "0"'s that are transmitted, and hence determines the content and integrity of the digital signal. From an economic viewpoint, the distance that can be spanned between a transmitter and receiver, while maintaining data integrity, determines the expenditures that must be made to physically lay fiber in the ground or to install repeaters and other supporting equipment.

One way to control the output of a digital lightwave communications system is to directly modulate the laser light source. For example, the laser could be turned on and off at intervals, thus generating digital 1's (on) and digital 0's (off). This can be accomplished by turning the current to the laser on and off. While this method may work in lower speed digital communications systems, in high-speed digital lightwave communications it is not practical to directly modulate the output of the laser because, as the current to the laser is changed, the wavelengths of the laser outputs are also slightly changed.

Direct laser modulation could thus cause significant dispersion in each of the different wavelengths traveling along a fiber optic cable, resulting in noise and data corruption at the receiver end of a high-speed digital lightwave system. This is because, particularly in a directly modulated laser system, multiple wavelengths are introduced by the modulation process. Each of these wavelengths has a slightly different propagation time, resulting in overlap at the receiver and therefore in possible data corruption and/or loss. In WDM (wavelength division multiplexing) systems, a significant amount of noise also results from carrying multiple wavelengths on a single fiber. This can result in loss of receiver sensitivity, because it is more difficult for the receiver ,to distinguish between the digital 1's and 0's, and hence to interpret the data carried by the signal.

High speed digital lightwave communications systems instead use modulators to modulate the laser output. Modulators do not affect the wavelengths carrying the data signal as much as direct modulation. However, these modulators require an RF amplitude input and bias point that must be set and maintained at or near an optimum value for each modulator. Otherwise, the resulting wavelength shift in the transmitted data, along with the inherent noise and dispersion occurring in WDM transmission systems, can result in the signals received at the receiver being noisy and difficult to differentiate.

Every modulator, such as a Mach-Zehnder modulator, can have a slightly different optimum RF amplitude input voltage (a peak-to-peak voltage V_{π}) and a slightly different optimum bias point (voltage). Together this optimum bias point and optimum RF amplitude V_{π} provide the best extinction ratio (the ratio between full light output to no light output) for the modulator. As the RF amplitude level drifts away from optimum (V_{π}), the received signal becomes noisier, resulting in increased difficulty for the receiver in differentiating the 1's and 0's that comprise the signal. Similar signal degradation also occurs with changes in the bias point away from its optimum value.

Current high-speed digital lightwave transmission systems manually set the RF amplitude as close as possible to the optimum value V_{π} and have no mechanism for automatically maintaining the RF amplitude at or near its optimum point. This "set-it-and-forget-it" methodology cannot compensate for changes,in the RF amplitude that might occur over time. For example, as temperature changes, the V_{π} of the modulator will likely also change, as will the gain of the RF amplifier. An RF amplifier gain that is set and forgotten can thus change ove'r time due to shock, vibration and/or changes in temperature, resulting in a received signal that is fuzzy and difficult to differentiate by the receiver. Also, the possibility exists that the RF amplitude may initially be set too high or too low due to operator error. As a result, the RF amplitude of the circuit cannot track changes within the modulator, or in the RF train, over temperature and time.

Another problem with current high-speed digital lightwave transmission systems is that the bias value is controlled by dithering the bias signal itself. Dithering of the bias signal to control bias value leads to what are called second-order effects in the dither. This means that, for example, if the bias is dithered at 500 Hz, then the output that must be looked for to control the bias value occurs at 1,000 Hz (i.e., the second harmonic of the dither signal). These second-order effects are much lower in amplitude than first-order (direct relationship) effects. Second-order effects can be analogized to the second derivative of a signal, which most closely approaches a flat line. The result of using second-order effects to control the bias is that prior art circuits must use a much greater amount of dither. It also means that the bias control circuitry must be much more sensitive and complex to identify the output control signal. A second-order circuit also generates more noise and tends to wander (is more imprecise than a first-order circuit).

Prior art second-order circuits are also not very robust, in that they are not high-gain circuits that can differentiate well between signal and noise, resulting in a circuit that is very susceptible to noise. These second-order circuits thus have a poor signal-to-noise ratio and have difficulty in differentiating and extracting the loop feedback signal from the noise.

### SUMMARY OF THE INVENTION

Therefore, a need exists for a method and system for controlling the RF amplitude and bias value of a modulator using first-order linear effects.

A further need exists for a method and system for first-order RF amplitude and bias control of a modulator that uses a feedback loop to control RF amplitude, so that RF amplitude can track changes in the modulator and in the RF train, over temperature and time.

Still further, a need exists for first-order RF amplitude and bias control of a modulator having a high signal-to-noise ratio and comprising a robust circuit high bandwidth feedback loops.

The present invention provides a method and system for first-order RF amplitude and bias control of a modulator that substantially eliminates or reduces disadvantages and problems associated with previously developed methods and systems for RF amplitude and bias control of a modulator within a digital lightwave communications system.

In particular, the present invention provides a method and system for robustly (using first order effects) controlling the bias point and radio frequency (RF) amplitude level of a modulator for an optical transmitter as defined in the appended claims.

The method and system for first order RF amplitude and bias control of a modulator of the present invention provides an important technical advantage in that it uses first-order linear effects to control the RF amplitude to and the bias value of a modulator.

A still further technical advantage of the present invention is that it provides a method and system for first-order RF amplitude and bias control of a modulator that uses a feedback loop to control the RF amplitude, so that the RF amplitude can track changes in the modulator and in the RF train over temperature and time.

An even further technical advantage of the present invention is that it provides a robust circuit for first-order RF amplitude and bias control of a Mach-Zehnder modulator with a high signal-to-noise ratio and high bandwidth feedback loops.

### BRIEF DESCRIPTION OF THE DRAWINGS

A more complete understanding of the present invention and the advantages thereof may be acquired by referring to the following description, taken in conjunction with the accompanying drawings in which like reference numbers indicate like features and wherein:
- FIGURE 1: shows a typical transfer function for a modulator, such as a Mach-Zehnder modulator, of this invention;
- FIGURE 2: is a horizontal view of digital data signal 40 of FIGURE 1;
- FIGURE 3: is a typical eye diagram of the data signals received at an optical receiver;
- FIGURE 4: is a more detailed graph of a modulator transfer function illustrating how dithering of the bias signal can be used to control RF amplitude;
- FIGURES 5A, 5B and 5C: compare bias dither and photodiode output signals for the cases of RF amplitude less than, greater than, and equal to V_{π};
- FIGURE 6: is a more detailed graph of a modulator transfer function illustrating how dithering of the RF amplitude can be used to control the modulator bias signal;
- FIGURES 7A, 7B and 7C: compare RF amplitude dither and photodiode output signals for the cases of bias value less than, greater than, and equal to quadrature;
- FIGURE 8: is a block diagram of one embodiment of the system of this invention;
- FIGURE 9: is a graphical representation of the gain characteristics of synchronous detector 836 of FIGURE 8; and
- FIGURE 10: is a block diagram of another embodiment of the system of this invention.

### DETAILED DESCRIPTION OF THE INVENTION

Preferred embodiments of the present invention are illustrated in the FIGURES, like numerals being used to refer to like and corresponding parts of the various drawings.

The present invention provides a method and system for first-order RF amplitude and bias control of a modulator, such as a Mach-Zehnder modulator ("MZM"), that can more accurately control the integrity of an optical signal transmitted by a digital lightwave communications system. The present invention provides an advantage over the prior , art in that feedback loops are used for both the RF amplitude and the bias signal to generate first-order effects, to more accurately maintain the RF amplitude and bias value at or near an optimum value. Both the RF amplitude and the bias feedback loops can automatically adjust to correct bias and RF amplitude values over time and physical changes. For example, the RF loop can adjust the RF amplitude by changing the gain of an RF amplifier as needed.

The present invention can be used to control the bias signal to a modulator by dithering the RF amplitude and to control the RF amplitude by dithering the signal bias. This involves changing either the gain on the RF amplifier or the bias signal in a regular way, for example, by having a 500 Hz square wave fed to the modulator as the bias dither or RF amplitude dither. By using RF amplitude dithering to control the bias, and bias dithering to control the RF amplitude, the control signal output from the circuit implementing the method and system of this invention will also be at 500 Hz (or at whatever frequency the dither signal is provided). Having the output control signal at the same frequency as the dither signal results in a first-order linear effect providing a more robust and sensitive means of control for the modulator. Both the bias and the RF amplitude in a system implementing the method and system of the present invention are controlled by first-order effects (the feedback loops use the first-order effects to generate a control signal).

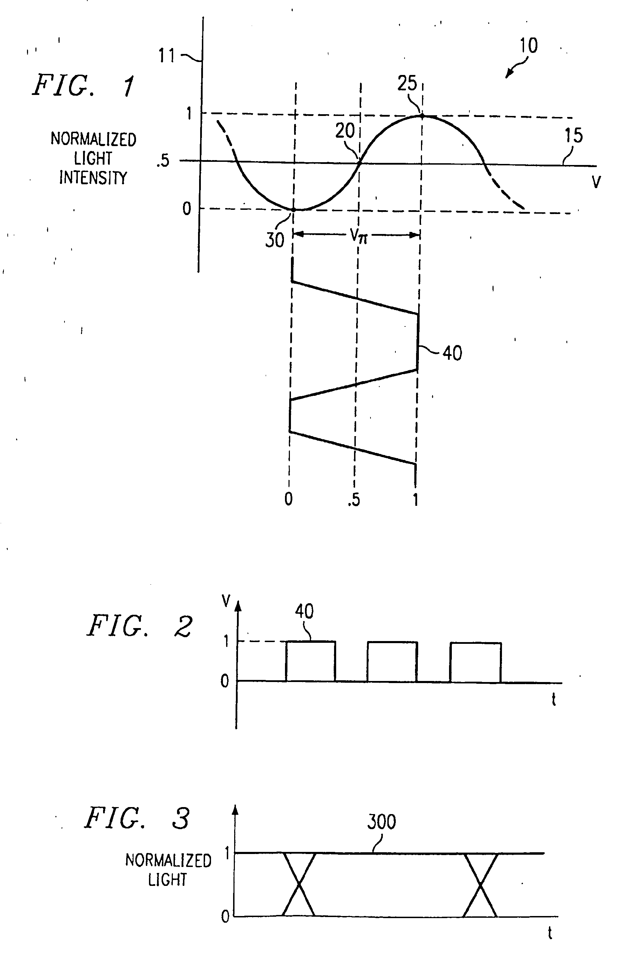

Every modulator, such as an MZM, has a distinctive transfer function. A transfer function is a curve representing the points at which a modulator will transition from no output to maximum output. FIGURE 1 shows a typical modulator transfer function 10 such as may be associated with an MZM used in the present invention. Transfer function 10 has a normalized light output of from zero to one, as shown on Y axis 11, corresponding to the digital optical signal output from the modulator. The X axis 15, labeled in volts, illustrates the V_{π} of the modulator. Point 20 of FIGURE 1 indicates the optimum bias point, called quadrature. Quadrature point 20 is the point midway between peaks 25 and 30 of the transfer function along both the X and Y axis. FIGURE 1 also shows a superimposed data signal 40 and its relation to the transfer function 10. Along its own X axis (corresponding to Y-axis 11), data signal 40 oscillates between normalized values zero and one. The distance along the X-axis between peaks 25 and 30 of transfer function 10 is referred to as V_{π}.

The preferred (optimum) value for the RF amplitude input voltage and bias input voltage signal are such that the bias input voltage is at quadrature and the RF amplitude input voltage is equal to V_{π}. The RF amplitude input voltage is the amplitude of the RF data signal that will be converted to an optical data signal by the modulator. The RF data signals are applied to the modulator to modulate the light from a laser such that when the RF amplitude signal goes high, the modulator would pass a full light signal, and when the RF amplitude signal goes low, the modulator would pass a zero light signal, as is shown in FIGURE 1. The RF amplitude can be thought of as being superimposed on the transfer function 10.

Note, however, that each modulator can have its own unique V_{π} and a different quadrature bias point. V_{π} can range, for example, from approximately +3 to approximately +5 volts peak-to-peak. Typically, the RF amplitude will not vary by , much over time, although it can vary over temperature. However, the bias point can and may vary greatly with time.

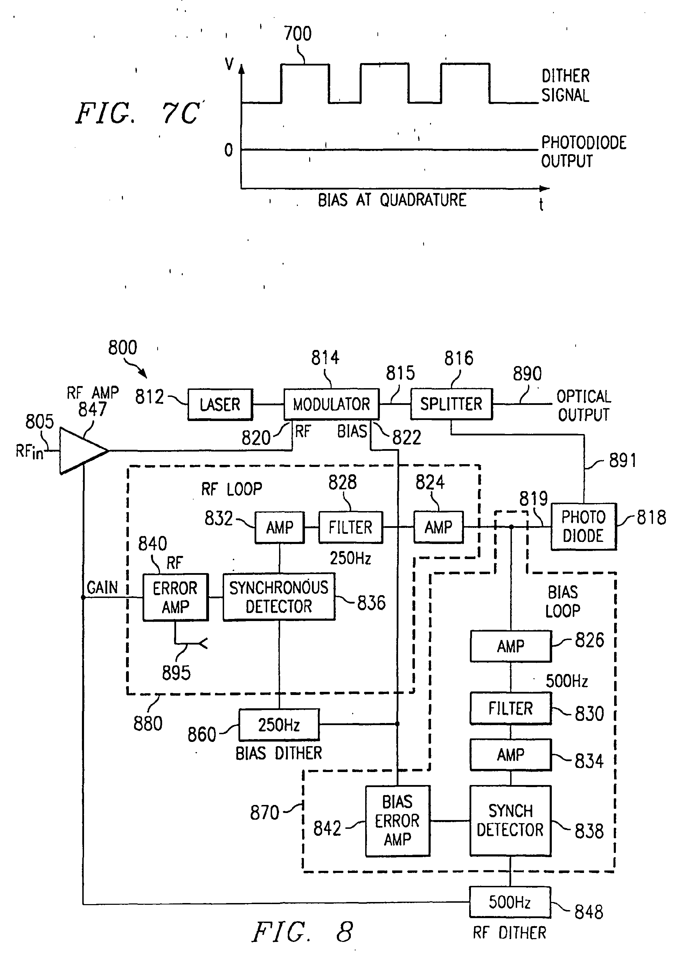

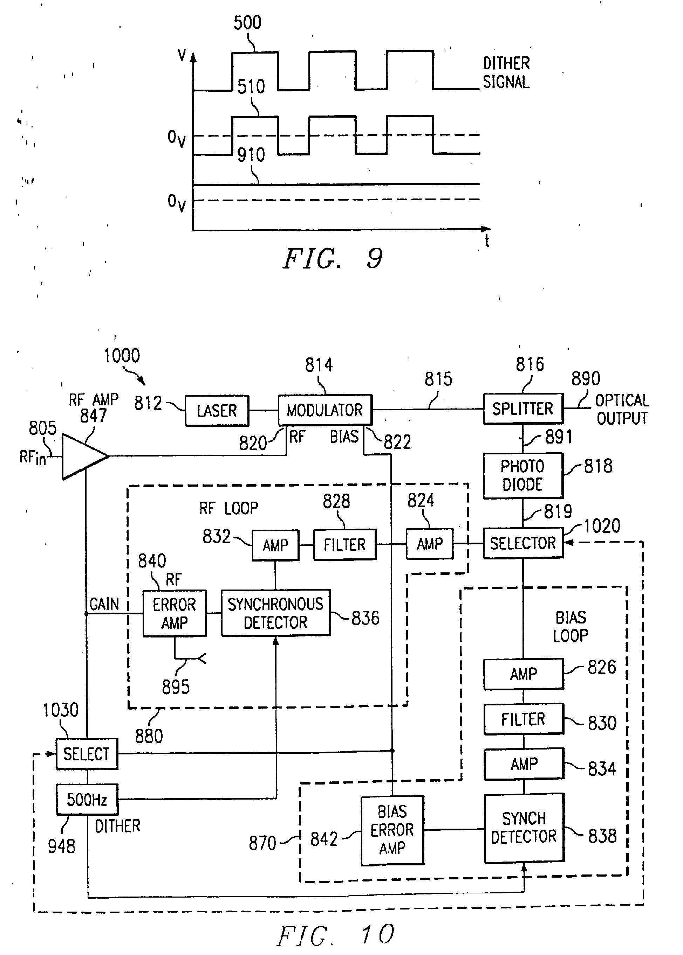

In this discussion of the present invention, normalized values are used to describe the modulator output (from zero to one), and not the actual output values, because the modulator itself does not supply any light. Rather, a laser out'put is provided as an input to the modulator, as discussed later as part of FIGURES 8 and 10. The laser is operated at a constant current, which provides a constant output power (signal). The constant output signal is input to the modulator. The modulator output thus depends on the output power of the laser. By using normalized values in our discussion, the discussion applies equally to any input power laser. A "0" value thus corresponds to no light output and a value of "1" corresponds to 100% of the light output.

The optimal point for the bias input voltage signal value is thus at a mid-point along transfer function 10. At this bias value, when the modulator switches from high to low, the maximum differential in output will occur. If, for example, the bias value were instead at a peak of the transfer function (points 25 or 30 of FIGURE 1), then when switching from high to low (or vice-versa), no difference in output would occur. The bias value should be selected to provide the best extinction ratio (the ratio between full light and no light). For the maximum extinction ratio, the bias is set,at quadrature with an RF amplitude level equal to V_{π}. The goal is thus to be biased at one-half power.

As shown in FIGURE 1, when an RF data signal is input into a modulator and acts upon the'input laser light in accordance with the analog transfer function, digital data signal 40 is output as a series of highs and lows corresponding to the analog transfer function's swings around the bias point, which is preferably at quadrature 20. Digital data signal 40 of FIGURE 1 is the digital data signal 40 of FIGURE 2 turned sideways and superimposed on the transfer function for illustration purposes. Data curve 40 of FIGURES 1 and 2 can represent either 2.5-gigabyte or 10-gigabyte per second data (or other bandwidth data) output from modulator as a lightwave output. An RF data signal with an amplitude equal to V_{π} results in a digital data signal 40 with highs and lows equal to the full normalized values of 0 and 1. The maximum extinction ratio is thus achieved.

FIGURE 3 is an "eye diagram" with axes of time and normalized light, that shows the normalized light received at the receiver of a digital lightwave transition system. The transitions occurring in the output data are shown in FIGURE 3 as viewed on an oscilloscope and correspond to the 1's and 0's of a digital signal. FIGURE 3 shows a random sample of the signal as viewed on an oscilloscope at the receiver end of a fiber. The oscilloscope takes a clock signal that is synchronous with the data signal and divides the data into small sections that are then sampled. A series of random 1's and 0's thus appear and form eye diagram 300.

The transitions shown as X's in eye diagram 300 of FIGURE 3 correspond to the swings in the transfer function around the bias point. For example, peak point 25 of FIGURE 1 corresponds to a normalized light value of one on FIGURE 3. Similarly, peak point 30 corresponds to a normalized light value of zero on eye diagram 300. The transitions marked as X's appear this way on an oscilloscope because they are not , perfect, instantaneous transitions, but rather they span some'period of time. The up slopes and down slopes forming the X' s in eye diagram 300 correspond to the swing from peak 30 to peak 25 of FIGURE 1, and the swing in value from zero to one of data curve 40. Eye diagram 300 thus correspohds to the data signal at the receiver end of a transmission system implementing the method and system of this invention.

The aim of this invention is to have the biggest spread possible in eye diagram 300 so that the transitions are clear and defined and thus easily discernable by a receiver at the receiver end of the transmission system. For example, if the RF data amplitude is smaller than V_{π}, eye diagram 300 of FIGURE 3 will shrink up because the switch from light to no light will be going from not quite minimum to not quite maximum. The same will occur if the RF data amplitude is greater than V_{π}. Any time the amplitude of the RF data signal is not equal to V_{π}, a smaller distribution occurs in eye diagram 300 of FIGURE 3. Therefore, when the RF data amplitude is not equal to V_{π}, eye diagram 300 becomes compressed and the data transitions become harder for a receiver to discern, possibly resulting in data corruption or loss can occur.

Controlling the RF amplitude, however, is only half the story. The bias voltage also has to be at or near the optimum quadrature point. Quadrature is defined as the mid-point of the normalized spread of the transfer function. Perhaps the best way to visualize the relationship between the bias signal and RF amplitude is that the bias voltage is supplied to the modulator as a DC voltage to set up where on transfer function 10'the modulator will operate. The RF data signal is supplied with no DC and, by itself, would be symmetrical about zero. However, the bias loop supplies the DC portion around which the,RF data signal will be symmetrical.

The bias DC voltage is thus the voltage value around which the AC RF data signal will continually swing to modulate the laser light input to the modulator and generate as output the digital 1's and 0's representing the RF data signal. If the bias value is off from the point of quadrature, then even if the RF amplitude is at the optimum value of V_{π}, the normalized output data, and hence eye diagram 300 of FIGURE 3, will be distorted because the modulator output is not going to minimum or to the maximum. Eye diagram 300 will become more narrow, dispersed, and, together with the noise inherent in WDM systems, can result in the output signal being difficult to discern by a receiver. A receiver will thus lose sensitivity and data can be corrupted or lost.

One reason the method and system of this invention seeks to control the RF data amplitude is that as the transmitted optical data signal travels through numerous kilometers of fiber to get to a receiver, along the way it will be optically amplified, which adds noise to the signal. From a receiver's viewpoint, if eye pattern 300 is noisy and hard to discern, the sensitivity of the receiver will suffer. Data corruption or loss can then occur, requiring a decrease in the distance between transmitter and receiver to ensure the integrity of the data signal.

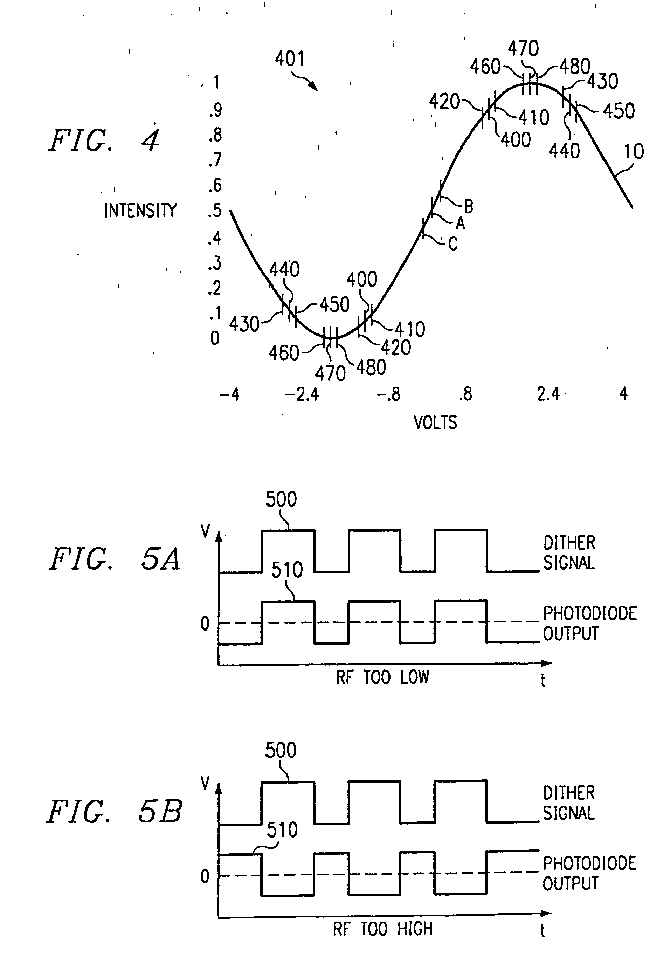

FIGURE 4 is a graph of a transfer function 10 having a V_{π} equal to four, used to illustrate how the bias of an MZM modulator can be dithered to control the RF amplitude. The Y axis of graph 401 indicates the intensity of the light output from the modulator and the X axis indicates units of voltage. Assuming in FIGURE 4 that the bias voltage is set at quadrature, the RF amplitude signal will swing symmetrically about the quadrature point. If the RF amplitude is set too low, as indicated by sets of RF low points 400, 410 and 420, the change in the intensity of the modulator output as the bias is dithered is positive. For example, suppose the bias starts at point A and is dithered up to point B (i.e., the dither voltage goes more positive by a slight amount corresponding to the change from A to B), the RF amplitude will shift along with the bias voltage from initial points 400 to points 410. Similarly, if the bias were to be dithered low, as indicated by going from point A to point C, the RF amplitude would follow the bias and go from points 400 to points 420. The RF amplitude thus shifts along with the dither bias.

As can be seen in FIGURE 4, when the bias is dithered high (point B), the 1 (high) output at point 410 is slightly higher than the 1 output at point 420, corresponding to when the bias is dithered low to point C. The same relationship is true for the zero (low) outputs. Overall, there is a positive increase in the intensity of the modulator output. In other words, the output from photodiode 818 of FIGURE 8 is in phase with the dither signal. Note that this has nothing to do with the RF data signal itself, because the RF data is input to the modulator at too fast a rate and gets converted to an average amount of light.

If, on the other hand, the RF amplitude level is greater than V_{π}, as indicated by sets of RF high points 430, 440 and 450, then the change in the intensity of the modulator output is negative as the bias is dithered. As shown in FIGURE 4, if the bias is dithered high from point A to point B, both the 0 and the 1 outputs at points 450 are lower than the 0 and 1 outputs at points 430, corresponding to when the bias is dithered low, from point A to point C. Therefore, both the 1 and 0 data are lower when the bias is dithered high than when the bias is dithered low, resulting in an inverted signal. The photodiode 818 output and the bias dither signal are thus out of phase. This is the opposite result from when the RF amplitude level is set too low.

Lastly, if the RF amplitude level is equal to V_{π}, as shown by sets of V_{π} points 460, 470 and 480, then if the bias is dithered from point A to point B, or from point A to point C, the modulator output intensity is roughly equal, regardless of the dither signal value. With the RF amplitude at V_{π}, therefore, the change in output intensity from MZ modulator 814 is zero, or near zero, as the bias is dithered. The change in the modulator output intensity can therefore be either positive, negative or zero, and, depending on its value, the RF amplitude control circuit of FIGURES 8 and 10 can correct the RF amplitude value in an attempt to make it equal to V_{π}.

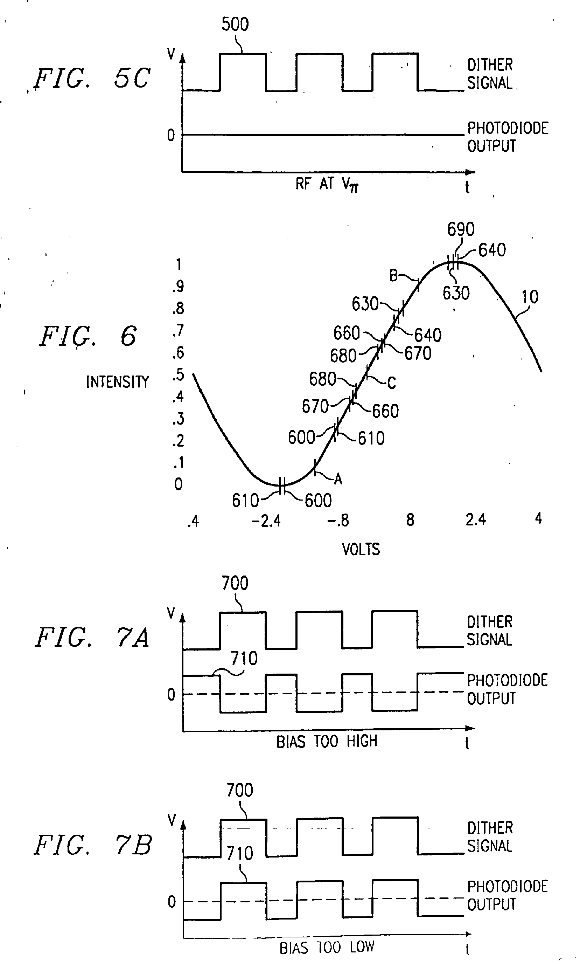

FIGURES 5A, 5B and 5C illustrate the three conditions discussed above of having the RF amplitude lower than, greater than, or equal to V_{π} while the bias signal is dithered around the quadrature point. FIGURE 5A shows dither signal 500 and photodiode output signal 510 in phase with one another, as discussed above, for the case of the RF amplitude lower than V_{π}. FIGURE 5B shows dither signal 500 and photodiode output signal 510 out of phase, corresponding to the RF amplitude level being greater than V_{π}. Lastly, FIGURE 5C shows dither signal 500 with a corresponding photodiode output signal 510 that is flat, for RF amplitude at V_{π}, indicating a zero change in the output intensity of the light from the modulator, such as modulator 814 of FIGURE 8. The way in which photodiode output 510 is used by the circuits of FIGURES 8 and 10 to control the RF amplitude will be discussed below in reference to those FIGURES.

FIGURE 6 is a graph of transfer function 10 of FIGURE 1 used to illustrate how the RF amplitude can be dithered to control the bias of, for example, modulator 814. The explanation for FIGURE 6 is similar to that of FIGURE 4, however as the RF amplitude is dithered from high to low, the bias point does not follow the change in RF amplitude, as the RF amplitude followed the change in bias in FIGURE 4. What is made clear by dithering of the RF amplitude to control the bias point, however, is the importance of first-order effects versus second-order effects. This is because the changes in the output intensity of modulator 814 as the RF amplitude is dithered will depend more on the slope of the transfer function from point-to-point than on shifts along the transfer function in the same direction, as was the case in FIGURE 4.

For example, if the bias is set too low, as shown by point A in FIGURE 6, then as the RF amplitude is dithered high from points 600 to points 610 (i.e., the RF amplitude width is increasing), the relative change in intensity at the upper end of the RF amplitude from that at the lower end of the RF amplitude is greater, resulting in a net positive change in the output intensity of modulator 814. In FIGURE 6, the'location of the superimposed RF signal has been chosen with one end corresponding to the valley of transfer function 10 to more clearly illustrate the changes in slope, but the same analysis holds true regardless of the location of the RF signal along transfer function 10.

Similarly, if the bias is set too high, as shown by point B, the change in the output intensity of the signal from modulator 814 will be negative. In other words, as the RF amplitude is dithered high, the output change will go low; as the RF amplitude is dithered low, the output change will go high. For example, as the RF amplitude is dithered high from point 630 to point 640, the net change in intensity along the lower end of the RF amplitude is greater than that at the higher end (located at peak 690 of transfer function 10), resulting in a net decrease in the intensity of the output from modulator 814.

Lastly, if the bias is set at quadrature (the preferred value), as indicated by point C, then as the RF amplitude is dithered high (from points 660 to points 670) or low (from points 660 to points 680), the net change on the high side of the RF amplitude signal will equal the net change on the low side, resulting in a zero net change in the intensity of the output from modulator 814. The location of the RF amplitude signal along transfer function 10 for all three cases discussed above was chosen to best illustrate the changes involved. However the principles remain the same regardless of the placement of the RF amplitude signal along transfer function 10.

Dithering of the RF amplitude comprises superimposing the dither signal (e.g., 500 Hz signal) on the gain of an amplifier providing the RF data signal. The RF amplitude, in fact, will be centered at the bias point and will typically be of a larger value than that shown in FIGURE 6. The RF amplitudes in FIGURE 6 were chosen small for illustrative purposes.

FIGUREs 7A, 7B and 7C are similar to FIGURES 5A, 5B and 5C and illustrate the relationship of the RF amplitude dither signal to the photodiode 818 output signal when the bias value is greater than quadrature, less than quadrature and at quadrature. As is the case when the RF amplitude is greater than V_{π}, when the bias is greater than quadrature, the photodiode 818 output 710 is out of phase with the RF dither signal 700, as shown in FIGURE 7A. FIGURE 7B shows that when the bias is less than quadrature, then as RF dither signal 700 changes, photodiode 818 output signal 710 changes in phase. Lastly, in FIGURE 7C, when the bias is at quadrature, changes in the RF amplitude caused by RF dither signal 700 result in no net change in the output of photodiode 818. Photodiode output signal 710 is thus a flat line (zero).

As in the case of the bias dither being used to control the RF amplitude, the RF amplitude dither can be used to control the bias, as explained below in conjunction with FIGURES 8 and 10. An advantage of this invention is that first-order effects are used to control the bias and RF amplitude, and not second-order effects. This is important because it can result in a higher signal level, and thus the signal-to-noise ratio on the dither (the recovered signal input into photodiode 818 of FIGURE 8) is higher, yielding a more robust and faster loop. The advantage of this is that a system implementing this invention does not require as much amplification. Another way to look at it is that not as much dither is required in the first place. If a feedback circuit instead use second-order effects, more dither would have to be added just to get the recovered photodiode signal level up out of the noise, and the higher dither itself would add noise to the output signal as a consequence. The eye pattern of FIGURE 3 would thus close up slightly when using more dither.

The method and system of this invention can be used in lightwave transmission systems based on, for example, the SONET or pseudo-random bit sequence ("PRBS") formats, and with systems that employ forward error correction schemes. In particular, OC48 and OC192 SONET format systems can be used. FIGURE 8 is a block diagram of one embodiment of the circuit for first-order RF amplitude and bias control of a modulator of the present invention. Circuit 800 includes laser 812 that provides the light to modulator 814 that will be modulated to generate digital optical data. Laser 812 can be any laser, as known to those in the art, for use in a lightwave transmission system. Modulator 814 includes RF input port 820 and bias input port 822. The laser light from laser 812 is modulated within modulator 814 based on the inputs into RF input port 820 and bias input port 822. Modulator 814 provides the modulated signal to splitter 816, which splits modulated signal 815 into transmitter optical output signal 890 and output dither signal 891. Output dither signal 891 is forwarded to photodiode 818. Photodiode 818 provides feedback signal 819 that will be used to control bias feedback loop 870 and RF feedback loop 880 to maintain RF amplitude and bias at or near optimum. Modulator 814 can be any modulator that has a transfer function centered around the half life of the modulated V_{π}.

For example, modulator 814 can be a Mach-Zehnder modulator or similar modulator.

The signal from photodiode 818 is fed to both RF feedback loop 880 and bias feedback loop 870. RF feedback loop 880 includes amplifier 824, which amplifies the signal from , photodiode 818 at the frequency for the loop. In the embodiment shown in FIGURE 8, the bias dither frequency is 250 Hz, so amplifier 824 amplifies the signal at 250 Hz and filters out any external noise. From amplifier 824, the signal is fed to filter 828, which filters the signal at 250 Hz to remove any residual data signal and noise and provides a 250 Hz feedback dither signal to amplifier 832. Amplifier 832 further amplifies the filtered signal and forwards the signal to synchronous detector 836. Amplifiers 824 and 832 provide the amplification necessary to get the photodiode 818 output signal level high enough for the synchronous detector 836. This is because synchronous detector 836 inserts some offsets into the signal and the amplification gets the signal level high enough to make the offsets insignificant. Amplifiers 824 and 832 also set the loop gain for the entire RF feedback loop 880. The level of gain for the loop can determine the speed of the loop. Amplifiers 824 and 832 can be off-the-shelf operational amplifier circuits. Filter 828 can be a switched capacitor filter, available off-the-shelf, such as those manufactured by National Semiconductor. Synchronous detector 836 comprises an operational amplifier and an analog switch.

The operational amplifier that is part of synchronous detector 836 has a gain that flips between +1 and -1. In other words, the operational amplifier flips between being a non-inverting amplifier and an inverting amplifier in synchronization with the bias or RF dither signal. Thus, when the dither signal is low, the gain of asynchronous detector 836 is -1. When the dither signal is high, synchronous detector 836 has a gain of +1.

FIGURE 9 is a graphical representation of the gain characteristics of synchronous detector 836. The example shown in FIGURE 9 corresponds to the situation where the bias signal is dithered to control the RF amplitude with the RF amplitude less than V_{π}. In this case (see FIGURE 5A), dither signal 500 and the photodiode output signal 510 are in phase, as previously discussed. Therefore, as shown in FIGURE 9, when the photodiode 818 output 510 is less than zero volts, the gain of synchronous detector 836 is -1, which inverts the photodiode output signal to a positive value and forwards it as an output from synchronous detector 836. Similarly, when the photodiode output 510 is greater than zero volts, the gain of synchronous detector 836 is +1 (in synch with the dither signal), resulting again in a positive output signal 910 from synchronous detector 836.

Synchronous detector 836 thus acts as a rectifier and changes the AC photodiode output signal 510 (feedback dither signal) into a DC synchronous detector output signal 910. In the case where photodiode output signal 510 is in phase with dither signal 500, the output signal 910 from synchronous detector 836 will be a positive value, as shown in FIGURE 9. In the case where photodiode output 510 (or 710 of FIGURE 7) is out of phase with dither signal 500 (700), the output signal 910 from synchronous detector 836 will be a negative signal. Lastly, in the case where photodiode output signal 510 is a flat (zero) output (indicating no change in the output intensity from modulator 814), the output of synchronous detector 836 is zero or flat (to match the photodiode output 510). The photodiode output 510 is actually zero (for the bias) when the bias is at quadrature or (for the RF amplitude) when the RF amplitude is at V_{π}. Synchronous detector output 910 can be slightly positive or slightly negative, not necessarily -1 or +1, because the photodiode output is itself typically only slightly positive or slightly negative, not necessarily +1 or -1. The +1 and -1 values are normalized values.

The positive and negative portions of photodiode output 510 of FIGURE 9 are converted by synchronous detector ,836 to outputs of the same magnitude because photodiode output signal 510 is an AC signal that is symmetric around zero. Synchronous detector 836 will continually adjust its gain to match the dither signal into modulator 814, providing either a slightly positive or a slightly negative DC voltage output 910 to RF error amplifier 840. DC voltage output 910 from synchronous detector 836 to RF error amplifier 840 can be used to control RF amplifier 847. Note that when photodiode output signal 510 is zero (flat), the output from synchronous detector 836 will also provide a zero output.

In this regard, for illustration purposes only, consider a situation where the output from synchronous detector 836 might be zero. The function of RF feedback loop 880 is to make the output from photodiode 818 zero (keeping the RF amplitude at or near V_{π}), at which point the output from synchronous detector 836 is also zero. However, in practice, instead of the voltage from synchronous detector 836 being zero, a slight positive offset is provided as pedestal voltage 895. This is because the voltage output from synchronous detector 836 would be zero if the data transitions were exact, but they are not. Because the transitions are not exact, the synchronous detector needs to see a slight offset at the nominal (zero) point. In the case of bias loop 870, the pedestal voltage 895 is not required because the transitions do not affect the bias loop in any way.

Pedestal voltage 895 is fed into RF error amplifier 840. Pedestal voltage 895 is on the order of about 30-50 millivolts for a photodiode DC voltage normalized to one volt. Pedestal voltage 895 is variable, can be adjusted by a technician, and it is used to adjust the RF amplitude level. A technician can either use an oscilloscope and adjust for the best eye pattern (FIGURE 3) or adjust for the best bit-error rate. Pedestal voltage 895 is a set-and-forget variable. Pedestal voltage 895 is required in the RF loop, but in the bias feedback loop 870 it can be an optional feature. By feeding an optional pedestal voltage into bias error amp 842, the bias level can be adjusted to be offset by some preset value. This could, for example, help in making the eye pattern of FIGURE 3 sharper.

The output signal from synchronous detector 836 is input to RF error amp 840, which also comprises a low frequency filter to filter out the high frequency residual on the signal provided by synchronous detector 836. The output signal from synchronous detector 836 is a DC signal. RF error amplifier 840 amplifies and filters this DC signal. The output signal from RF error amplifier 840 is the gain control input to RF amplifier 847.

Thus, if, for example, in the situation where the RF amplitude is too high, the change in the intensity of the light output from modulator 814 will be negative, resulting in the dither signal and the photodiode 818 output signal , being out of phase. As explained above, the output from synchronous detector 836 will then be slightly negative. This slightly negative DC signal is input to RF error amplifier 840, which amplifies it and forwards the amplified DC signal to RF input amplifier 847 as a gain , control signal. The slightly negative gain control signal into RF amplifier 847 results in a decrease in the amplitude of the RF data signal (voltage) sent to the RF input port 820 of modulator 814. The RF amplitude is adjusted this way incrementally until it is returned to (or near) the optimal value of V_{π}. This feedback loop repeats in a continuous fashion to constantly control and maintain the RF amplitude near or at V_{π}.

RF data input 805 is the data signal that will be transmitted in the form of optical light from modulator 814 (i.e., it modulates the light input from laser 812). The RF amplitude dither is provided by RF dither circuit 848 at, for example, 500 Hz. Dither circuit 848 provides a dither signal to the gain input to RF input amplifier 847 and also to synchronous detector 838 within bias feedback loop 870, as will be explained below. The bias dither signal is provided by bias dither circuit 860, which, like RF dither circuit 848, provides a dither signal to the input to bias port 822 of modulator 814 and to synchronous detector 836 in the RF feedback loop 880. The bias dither signal and RF dither signal are fed into the RF feedback loop synchronous detector 836 and the bias feedback loop synchronous detector 838, respectively, to synchronize the gain of synchronous detectors 836 and 838 to the respective dither signal.

Bias loop 870 is very similar to RF feedback loop 880 and consists of amplifier 826, filter 830, amplifier 834, bias synchronous detector 838, and bias error amplifier 842. Each of the components within bias loop 870 provides the same functions as the corresponding components in RF feedback loop 880, with the exception that filter 830 can be a different frequency filter and bias error amplifier 832 need not have a pedestal voltage input. Otherwise, the two loops work in essentially the same manner and their description is likewise essentially the same.

It is important to note that the dither signals provided by RF amplitude dither circuit 848 and bias dither circuit 860 may be such that one is one-half the frequency of the other. In the embodiment of FIGURE 8, the RF amplitude dither is set at 500 Hz and the bias dither is set at 250 Hz. This is because dither signals are typically square waves (i.e., 50% duty cycle square waves) that only provide discernible signal at the fundamental frequency and the odd harmonics of the fundamental frequency. Therefore, for a 250 Hz dither square wave, the frequency components available are 250 Hz, 750 Hz, 1250 Hz, etc. For a 500 Hz dither signal, the frequency components available are 500 Hz, 1500 Hz, 3000 Hz, and so on. In the embodiment of FIGURE 8, there are thus no frequency components that overlap between the RF amplitude dither and the bias dither. This is important because the output provided from photodiode 818 includes frequency components for both RF and bias dither signals that must be filtered out within their respective loops. If the frequency components for each of the dither signals (such as error harmonics) overlap, it is very difficult to distinguish between them. It is therefore important that dither signals are chosen so that they and their harmonics do not overlap.

FIGURE 10 shows another embodiment of the method and system for first-order RF amplitude and bias control of a modulator of the present invention. Circuit 1000 of FIGURE 10 is the same as circuit 800 of FIGURE 8, with the exception that circuit 1000 includes synchronized selectors 1020 and 1030 and does not include bias dither circuit 860. Instead, circuit 1000 of FIGURE 10 has a single dither circuit, dither circuit 948, which can be at any selected frequency, such as the 500 Hz frequency shown in FIGURE 10. Dither circuit 948 can, using synchronized selectors 1020 and 1030, provide a dither signal to either the bias or the RF amplitude.

The'refore, the problems of overlapping dither frequencies of the first embodiment of this invention, as shown in FIGURE 8, do not exist in the embodiment of FIGURE 10.

Synchronized selector switches 1020 and 1030 are synchronized such that when one selector switch is open, the other is closed, and vice versa. In this way, the dither signal from dither circuit 948 can be selectively provided to either the gain control signal to RF amplifier 847 or to the bias control signal provided to bias input 822 of modulator 814. One disadvantage of the embodiment of this invention shown in FIGURE 10 is that when switching between synchronized selector switches 1020 and 1030, the switching is normally done at about a 10 Hz to 30 Hz rate, which generates low frequency components in the control loop signals which must then be filtered out. These 10 Hz to 30 Hz signals are much more difficult to filter out than, for example, the 500 Hz dither signal, and can lead to increased noise in the bias and RF control signals. The eye pattern of FIGURE 3 is thus made noisier. Note also that in the embodiment shown in FIGURE 10, filters 828 and 830 are both of the same frequency, in this case 500 Hz.

The rate at which the circuit 1000 of FIGURE 10 switches between synchronized selectors 1020 and 1030 can be pre-set at some arbitrary value. Typically, bias loop 870 is configured to be approximately five times faster than the RF feedback loop 880 (typically about 1 Hz on the bias loop). The bias loop might be, for example, at 1 Hz, and the RF loop set at .2 Hz. For various reasons, the bias loop needs to be faster than the RF loop. The end result is that since typically the bias loop is about five times faster than the RF loop, the switching between synchronized selectors is typically set as a 25%/75% split. Therefore, 25% of the time the dither signal is input to the RF gain, and 75% of the time the dither signal is input to the bias signal. This feedback cycle ratio of 3:1 typically results in more of a signal fed through the bias loop, making the bias feedback loop inherently faster than the RF feedback loop, even though both loops typically have the same component values, amplification and filters.

Although the present invention has been described in detail herein with reference to the illustrative embodiments, it should be understood that the description is by way of example only and is not to be construed in a limiting sense. It is to be further understood, therefore, that numerous changes in the details of the embodiments of this invention and additional embodiments of this invention will be apparent to, and may be made by, persons of ordinary skill in the art having reference to this description. It is contemplated that all such changes and additional embodiments are within the scope of this invention as claimed below.

## Claims

1. A system (800) for robustly controlling the bias point (20) and RF, Radio Frequency, amplitude level of a modulator (814) for an optical transmitter, wherein said modulator (814) comprises an RF input port (820) for receiving an RF data signal (RF) from an RF amplifier (847) and a bias input port (822) for receiving a bias signal (BIAS), wherein said modulator (814) is configured to receive laser light from a laser (812) and to modulate said laser light based on said RF data signal (RF) and said bias signal (BIAS), whereby a modulated signal (815) is obtained, said system (800) comprising:
a splitter (816) to split said modulated signal (815) into a transmitter optical output signal (890) and an output dither signal component (891),
a photodiode (818) that converts the output dither signal component (891) to provide a feedback signal (819),
an RF amplitude dither circuit (848) configured to provide an RF amplitude dither signal (RF DITHER) to a gain input of said RF input amplifier (847),
a bias dither circuit (860) configured to provide a bias dither signal (BIAS DITHER) to the bias input port (822) of said modulator (814),
a bias feedback loop (870), wherein said bias feedback loop (870) is configured to control a bias input voltage to said bias input port (822) of said modulator (847) depending on said feedback signal (819),
an RF feedback loop (880), wherein said RF feedback loop (880) is configured to control a gain control input (GAIN) to said gain input of said RF input amplifier (847) depending on said feedback signal (819), wherein said system is

2. System (800) according to claim 1, wherein said bias dither signal (BIAS DITHER) and said RF dither signal (RF DITHER) are in a relationship where one is half the frequency of the other.

3. System (800) according to claim 1, wherein said bias dither signal (BIAS DITHER) is at 250 Hertz and said RF dither signal (RF DITHER) is at 500 Hertz.

4. System (800) according to claim 1, wherein there are no frequency components of said RF dither signal (RF DITHER) and said bias dither signal (BIAS DITHER) that overlap.

5. A system (1000) for robustly controlling the bias point (20) and RF, Radio Frequency, amplitude level of a modulator (814) for an optical transmitter, wherein said modulator (814) comprises an RF input port (820) for receiving an RF data signal (RF) from an RF amplifier (847) and a bias input port (822) for receiving a bias signal (BIAS), wherein said modulator (814) is configured to receive laser light from a laser (812) and to modulate said laser light based on said RF data signal (RF) and said bias signal (BIAS), whereby a modulated signal (815) is obtained, said system (1000) comprising:
a splitter (816) to split said modulated signal (815) into a transmitter optical output signal (890) and an output dither signal component (891),
a photodiode (818) that converts the output dither signal component (891) to provide a feedback signal (819),
a bias feedback loop (870),
an RF feedback loop (880),
a first selector switch (1020) configured to selectively provide said feedback signal (819) to said bias feedback loop (870) or to said RF feedback loop (880),
a single dither circuit (948) configured to provide a dither signal (DITHER), preferably at any selected frequency,
a second selector switch (1030) configured to selectively provide said dither signal (DITHER) of the single dither circuit (948) to a gain input of said RF input amplifier (847) or to the bias input port (822) of said modulator (814),
wherein said first and second selector switches (1020, 1030) are synchronized with each other such that when one selector switch is open, the other is closed, and vice versa,
wherein said bias feedback loop (870) is configured to control a bias input voltage to said bias input port (822) of said modulator (847) depending on said output dither signal component (819),
wherein said RF feedback loop (880) is configured to control a gain control input (GAIN) to said gain input of said RF input amplifier (847) depending on said output dither signal component (819).

6. System (1000) according to claim 5, wherein said system is configured to operate said selector switches (1020, 1030) such that a) if the first selector switch (1020) connects an output of the photodiode (818) to the RF feedback loop (880), the second selector switch (1030) connects an output of the single dither circuit (948) to said bias input port (822) of said modulator (814), and that b) if the first selector switch (1020) connects an output of the photodiode (818) to the bias feedback loop (870), the second selector switch (1030) connects an output of the single dither circuit (948) to said gain input of said RF input amplifier (847).

7. System (1000) according to claim 5 or 6, wherein said system (1000) is configured to perform a switching of said selector switches (1020, 1030) at about a 10 Hz to 30 Hz rate.

8. System (1000) according to one of the claims 5 to 7, wherein said system (1000) is configured to perform a switching of said selector switches (1020, 1030) at a 25%/75% split such that 25% of the time the dither signal (DITHER) is input to said gain input of said RF input amplifier (847) and 75% of the time the dither signal (DITHER) is input to the bias input port (822) of said modulator (814).

9. System (800, 1000) according to one of the preceding claims, wherein said RF feedback loop (880) comprises: a first amplifier (824) configured to amplify said feedback signal (819), a filter (828) configured to filter an output signal of said first amplifier (824) at a first predetermined frequency to obtain a feedback dither signal, wherein said first predetermined frequency is preferably a frequency of said bias dither signal (BIAS DITHER) of said bias dither circuit (860) or, in case of the single dither circuit (948), a frequency of said dither signal (DITHER) of said single dither circuit (948), a second amplifier (832) configured to amplify said feedback dither signal, a synchronous detector (836) configured to rectify an output signal of said second amplifier (832) into a DC output signal, and an RF error amplifier (840) configured to amplify and filter said DC output signal to provide a gain control signal to said gain input of said RF input amplifier (847).

10. System (800, 1000) of Claim 9, wherein said RF feedback loop (880) further comprises a pedestal voltage input (895) into said RF error amplifier (840).

11. System (800, 1000) of Claim 9, wherein said synchronous detector further comprises an operational amplifier and an analog switch.

12. System (800, 1000) according to claim 11, wherein said operational amplifier is either an inverting or a non-inverting amplifier in synchronization with a) said bias dither signal (BIAS DITHER) or, in case of the single dither circuit (948), b) said dither signal (DITHER).

13. System (800, 1000) according to one of the preceding claims, wherein said bias feedback loop (870) comprises:
a first bias amplifier (826) configured to amplify said feedback signal (819), a filter (830) configured to filter an output signal of said first bias amplifier (826) at a second predetermined frequency to obtain a bias output dither signal, wherein said second predetermined frequency is preferably a frequency of said RF dither signal (RF DITHER) of said RF amplitude dither circuit (848) or, in case of the single dither circuit (948), a frequency of said dither signal (DITHER) of said single dither circuit (948), a second bias amplifier (834) configured to amplify said bias output dither signal, a synchronous detector (838) configured to rectify said amplified bias output dither signal into a DC output signal, and a bias error amplifier (842) configured to amplify and filter said DC output signal of the synchronous detector (838) to provide a bias input voltage to said modulator (814).

14. System (800, 1000) according to claim 13, wherein said synchronous detector (838) of the bias feedback loop (870) comprises an operational amplifier and an analog switch.

15. System (800, 1000) according to claim 14, wherein said operational amplifier is either an inverting or a non-inverting amplifier in synchronization with a) said RF amplitude dither signal (RF DITHER) or, in case of the single dither circuit (948), b) said dither signal (DITHER).

16. System (800, 1000) according to one of the preceding claims, wherein said system (800, 1000) comprises at least one of: said laser (812), said modulator (814), said RF amplifier (847).

17. System (800, 1000) according to one of the preceding claims, wherein said modulator (814) is a Mach-Zehnder modulator.

18. System (800, 1000) according to one of the preceding claims, wherein both said RF feedback loop (880) and said bias feedback loop (870) are configured to automatically adjust to correct bias and RF amplitude values over time and physical changes.

19. Method of operating a system (800) for robustly controlling the bias point (20) and RF, Radio Frequency, amplitude level of a modulator (814) for an optical transmitter, wherein said modulator (814) comprises an RF input port (820) for receiving an RF data signal (RF) from an RF amplifier (847) and a bias input port (822) for receiving a bias signal (BIAS), wherein said modulator (814) is configured to receive laser light from a laser (812) and to modulate said laser light based on said RF data signal (RF) and said bias signal (BIAS), whereby a modulated signal (815) is obtained, said method comprising the following steps:
splitting, by means of a splitter (816), said modulated signal (815) into a transmitter optical output signal (890) and an output dither signal component (891),
converting, by means of a photodiode (818), the output dither signal component (891) to provide a feedback signal (819),
providing, by means of an RF amplitude dither circuit (848), an RF amplitude dither signal (RF DITHER) to a gain input of said RF input amplifier (847),
providing, by means of a bias dither circuit (860), a bias dither signal (BIAS DITHER) to the bias input port (822) of said modulator (814),
controlling, by means of a bias feedback loop (870), a bias input voltage to said bias input port (822) of said modulator (847) depending on said feedback signal (819),
controlling, by means of an RF feedback loop (880), a gain control input (GAIN) to said gain input of said RF input amplifier (847) depending on said feedback signal (819),

20. Method according to claim 19, wherein said bias dither signal (BIAS DITHER) and said RF dither signal (RF DITHER) are in a relationship where one is half the frequency of the other.

21. Method according to one of the claims 19 to 20, wherein said bias dither signal (BIAS DITHER) is at 250 Hertz and said RF dither signal (RF DITHER) is at 500 Hertz.

22. Method according to one of the claims 19 to 21, wherein there are no frequency components of said RF dither signal (RF DITHER) and said bias dither signal (BIAS DITHER) that overlap.

23. Method of operating a system (800) for robustly controlling the bias point (20) and RF, Radio Frequency, amplitude level of a modulator (814) for an optical transmitter, wherein said modulator (814) comprises an RF input port (820) for receiving an RF data signal (RF) from an RF amplifier (847) and a bias input port (822) for receiving a bias signal (BIAS), wherein said modulator (814) is configured to receive laser light from a laser (812) and to modulate said laser light based on said RF data signal (RF) and said bias signal (BIAS), whereby a modulated signal (815) is obtained, said method comprising the following steps:
splitting, by means of a splitter (816), said modulated signal (815) into a transmitter optical output signal (890) and an output dither signal component (891),
converting, by means of a photodiode (818), the output dither signal component (891) to provide a feedback signal (819),
selectively providing, by means of a first selector switch (1020), said feedback signal (819) to a bias feedback loop (870) or to an RF feedback loop (880),
providing, by means of a single dither circuit (948), a dither signal (DITHER), preferably at any selected frequency,
selectively providing, by means of a second selector switch (1030), said dither signal (DITHER) of the single dither circuit (948) to a gain input of said RF input amplifier (847) or to the bias input port (822) of said modulator (814),
wherein said first and second selector switches (1020, 1030) are synchronized with each other such that when one selector switch is open, the other is closed, and vice versa,
wherein said bias feedback loop (870) controls a bias input voltage to said bias input port (822) of said modulator (847) depending on said output dither signal component (819),
wherein said RF feedback loop (880) controls a gain control input (GAIN) to said gain input of said RF input amplifier (847) depending on said output dither signal component (819).

24. Method according to claim 23, wherein said system (1000) operates said selector switches (1020, 1030) such that a) if the first selector switch (1020) connects an output of the photodiode (818) to the RF feedback loop (880), the second selector switch (1030) connects an output of the single dither circuit (948) to said bias input port (822) of said modulator (814), and that b) if the first selector switch (1020) connects an output of the photodiode (818) to the bias feedback loop (870), the second selector switch (1030) connects an output of the single dither circuit (948) to said gain input of said RF input amplifier (847).

25. Method according to one of the claims 23 or 24, wherein said system (1000) performs a switching of said selector switches (1020, 1030) at about a 10 Hz to 30 Hz rate.

26. Method according to one of the claims 23 to 25, wherein said system (1000) performs a switching of said selector switches (1020, 1030) at a 25%/75% split such that 25% of the time the dither signal (DITHER) is input to said gain input of said RF input amplifier (847) and 75% of the time the dither signal (DITHER) is input to the bias input port (822) of said modulator (814).

27. Method according to one of the claims 19 to 26, wherein said RF feedback loop (880) comprises: a first amplifier (824) amplifying said feedback signal (819), a filter (828) filtering an output signal of said first amplifier (824) at a first predetermined frequency to obtain a feedback dither signal, wherein said first predetermined frequency is preferably a frequency of said bias dither signal (BIAS DITHER) of said bias dither circuit (860) or, in case of the single dither circuit (948), a frequency of said dither signal (DITHER) of said single dither circuit (948), a second amplifier (832) amplifying said feedback dither signal, a synchronous detector (836) rectifying an output signal of said second amplifier (832) into a DC output signal, and an RF error amplifier (840) amplifying and filtering said DC output signal to provide a gain control signal to said gain input of said RF input amplifier (847).

28. Method according to claim 27, wherein said synchronous detector (836) further comprises an operational amplifier and an analog switch, wherein said operational amplifier is either an inverting or a non-inverting amplifier and operates in synchronization with a) said bias dither signal (BIAS DITHER) or, in case of the single dither circuit (948), b) said dither signal (DITHER).

29. Method according to one of the claims 19 to 28, wherein said bias feedback loop (870) comprises: a first bias amplifier (826) amplifying said feedback signal (819), a filter (830) filtering an output signal of said first bias amplifier (826) at a second predetermined frequency to obtain a bias output dither signal, wherein said second predetermined frequency is preferably a frequency of said RF dither signal (RF DITHER) of said RF amplitude dither circuit (848) or, in case of the single dither circuit (948), a frequency of said dither signal (DITHER) of said single dither circuit (948), a second bias amplifier (834) amplifying said bias output dither signal, a synchronous detector (838) rectifying said amplified bias output dither signal into a DC output signal, and a bias error amplifier (842) amplifying and filtering said DC output signal of the synchronous detector (838) to provide a bias input voltage to said modulator (814).

30. Method according to claim 29, wherein said synchronous detector (838) of the bias feedback loop (870) comprises an operational amplifier and an analog switch, wherein said operational amplifier is either an inverting or a non-inverting amplifier an operates in synchronization with a) said RF amplitude dither signal (RF DITHER) or, in case of the single dither circuit (948), b) said dither signal (DITHER).

31. Method according to one of the claims 19 to 30, wherein said system (800, 1000) comprises at least one of: said laser (812), said modulator (814), said RF amplifier (847).

32. Method according to one of the claims 19 to 31, wherein said system (800, 1000) performs RF amplitude dithering by means of said RF amplitude dither circuit (848) to control a bias of said modulator (814), and performs bias dithering by means of said bias dither circuit (860) to control an RF amplitude of said RF data signal (RF).

33. Method according to one of the claims 19 to 32, wherein said modulator (814) is a Mach-Zehnder modulator.

34. Method according to one of the claims 19 to 33, wherein both said RF feedback loop (880) and said bias feedback loop (870) automatically adjust to correct bias and RF amplitude values over time and physical changes.

35. Method according to one of the claims 19 to 34, wherein said laser (812) is operated at a constant input current.

## Patentansprüche

1. System (800) zur robusten Steuerung des Vorspannungspunktes (20) und des Funkfrequenz- bzw. RF-Amplitudenpegels eines Modulators (814) für einen optischen Sender, wobei der besagte Modulator (814) einen RF-Eingangsport (820) für den Empfang eines RF-Datensignals (RF) von einem RF-Verstärker (847) und einen Vorspannungs-Eingangsport (822) für den Empfang eines Vorspannungssignals (BIAS) umfasst, wobei der besagte Modulator (814) dafür konfiguriert ist, Laserlicht von einem Laser (812) zu empfangen und das besagte Laserlicht auf der Basis des besagten RF-Datensignals (RF) und des besagten Vorspannungssignals (BIAS) zu modulieren, wodurch ein moduliertes Signal (815) erhalten wird, wobei das besagte System (800) umfasst:
Einen Splitter (816) zum Aufspalten des besagten modulierten Signals (815) in ein optisches Senderausgangssignal (890) und eine Dither-Ausgangssignalkomponente (891),
eine Fotodiode (818), welche die Dither-Ausgangssignalkomponente (891) konvertiert, um ein Rückkopplungssignal (819) bereitzustellen,
eine RF-Amplituden-Ditherschaltung (848), welche für das Bereitstellen eines RF-Amplituden-Dithersignals (RF DITHER) an einen Verstärkungseingang des besagten RF-Eingangsverstärkers (847) konfiguriert ist,
eine Vorspannungs-Ditherschaltung (860), welche für das Bereitstellen eines Vorspannungs-Dithersignals (BIAS DITHER) an den Vorspannungs-Eingangsport (822) des besagten Modulators (814) konfiguriert ist,
eine Vorspannungsrückkopplungsschleife (870), wobei die besagte Vorspannungsrückkopplungsschleife (870) für die Steuerung einer Bias-Eingangsspannung in den besagten Vorspannungs-Eingangsport (822) des besagten Modulators (847) in Abhängigkeit von dem besagten Rückkoppltungssignal (819) konfiguriert ist,
eine RF-Rückkopplungsschleife (880), wobei die besagte RF-Rückkopplungsschleife (880) für die Steuerung eines Verstärkungssteuereingangs (GRAIN) in den besagten des besagten RF-Eingangsverstärkers (847) in Abhängigkeit von dem besagten Rückkopplungssignal (819) konfiguriert ist, wobei das besagte System dafür konfiguriert ist, ein RF-Amplituden-Dithering anhand der besagten RF-Amplituden-Ditherschaltung (848) durchzuführen, um eine Vorspannung des besagten Modulators (814) zu steuern, und ein Vorspannungs-Dithering anhand der besagten Vorspannungs-Ditherschaltung (860) durchzuführen, um eine RF-Amplitude des besagten RF-Datensignals (RF) zu steuern.

2. System (800) nach Anspruch 1, wobei das besagte Vorspannungs-Dithersignal (BLAS DITHER) und das besagte RF-Dithersignal (RF DITHER) derart in einem Verhältnis zueinander stehen, dass das eine die halbe Frequenz des anderen ist.

3. System (800) nach Anspruch 1, wobei das besagte Vorspannungs-Dithersignal (BIAS DITHER) bei 250 Hertz und das besagte RF-Dithersignal (RF DITHER) bei 500 Hertz liegt.

4. System (800) nach Anspruch 1, wobei keine Frequenzkomponenten des besagten RF-Dithersignals (RF DITHER) und des besagten Vorspannungs-Dithersignals (BIAS DITHER) bestehen, die sich überlappen.

5. System (1000) zur robusten Steuerung des Vorspannungspunktes (20) und des Funkfrequenz- bzw. RF-Amplitudenpegels eines Modulators (814) für einen optischen Sender, wobei der besagte Modulator (814) einen RF-Eingangsport (820) für den Empfang eines RF-Datensignals (RF) von einem RF-Verstärker (847) und einen Vorspannungs-Eingangsport (822) für den Empfang eines Vorspannungssignals (BIAS) umfasst, wobei der besagte Modulator (814) dafür konfiguriert ist, Laserlicht von einem Laser (812) zu empfangen und das besagte Laserlicht auf der Basis des besagten RF-Datensignals (RF) und des besagten Vorspannungssignals (BIAS) zu modulieren, wodurch ein moduliertes Signal (815) erhalten wird, wobei das besagte System (1000) umfasst:
Einen Splitter (816) zum Aufspalten des besagten modulierten Signals (815) in ein optischer Senderausgangssignal (890) und eine Dither-Ausgangssignalkomponente (891),
eine Fotodiode (818), welche die Dither-Ausgangssignalkomponente (891) konvertiert, um ein Rückkopplungssignal (819) bereitzustellen,
eine Vorspannungsrückkopplungsschleife (870),
eine RF-Rückkopplungsschleife (880),
einen ersten Wahlschalter (1020), welcher für das selektive Bereitstellen des besagten Rückkopplungssignals (819) an die besagte Vorspannungsrückkopplungsschleife (870) oder an die besagte RF-Rückkopplungsschleife (880) konfiguriert ist,
eine einzelne Ditherschaltung (948), welche für das Bereitstellen eines Dithersignals (DITHER), vorzugsweise mit einer beliebigen ausgewählten Frequenz, konfiguriert ist,
einen zweiten Wahlschalter (1030), welcher für das selektive Bereitstellen des besagten Dithersignals (DITHER) der einzelnen Ditherschaltung (948) an einen Verstärkungseingang des besagten RF-Eingangsverstärkers (847) oder an den Vorspannungs-Eingangsport (822) des besagten Modulators (814) konfiguriert ist,
wobei der besagte erste und der besagte zweite Wahlschalter (1020, 1030) aufeinander abgestimmt sind, so dass, wenn ein Wahlschalter offen ist, der andere geschlossen ist, und umgekehrt,
wobei die besagte Vorspannungsrückkopplungsschleife (870) dafür konfiguriert ist, eine Bias-Eingangsspannung in den besagten Vorspannungs-Eingangsport (822) des besagten Modulators (847) in Abhängigkeit von der besagten Dither-Ausgangssignalkomponente (819) zu steuern,
wobei die besagte RF-Rückkopplungsschleife (880) dafür konfiguriert ist, einen Verstärkungssteuereingang (GAIN) in den besagten Verstärkungseingang des besagten RF-Eingangsverstärkers (847) in Abhängigkeit von der besagten Dither-Ausgangssignalkomponente zu steuern.

6. System (1000) nach Anspruch 5, wobei das besagte System dafür konfiguriert ist, die besagten Wählschalter (1020, 1030) derart zu betreiben, dass a) wenn der erste Wahlschalter (1020) einen Ausgang der Fotodiode (818) an die RF-Rückkopplungsschleife (880) anschließt, der zweite Wahlschalter (1030) einen Ausgang der einzelnen Ditherschaltung (948) an den besagten Vorspannungs-Eingangsport (822) des besagten Modulators (814) anschließt, und dass b) wenn der erste Wahlschalter (1020) einen Ausgang der Fotodiode (818) an die Vorspannungsrückkopplungsschleife (870) anschließt, der zweite Wahlschalter (1030) einen Ausgang der einzelnen Ditherschaltung (948) an den besagten Verstärkungseingang des besagten RF-Eingangsverstärkers (847) anschließt.

7. System (1000) nach Anspruch 5 oder 6, wobei das besagte System (1000) für das Durchführen eines Schaltens der besagten Wahlschalter (1020, 1030) mit einer Rate von etwa 10Hz bis 30 Hz konfiguriert ist.

8. System (1000) nach einem der Ansprüche 5 bis 7, wobei das besagte System (1000) für das Durchführen einer Schaltung der besagten Wählschalter (1020, 1030) mit einer 25%775%-Aufteilung konfiguriert ist, so dass das Dithersignal (DITHER) während 25% der Zeit in den besagten Verstärkungseingang des besagten RF-Eingangsverstärkers (847) eingegeben wirt, und das Dithersignal (DITHER) während 75% der Zeit in den Vorspannungs-Eingangsport (822) des besagten Modulators (814) eingegeben wird.

9. System (800, 1000) nach einem der vorstehenden Ansprüche, wobei die besagte RF-Rückkopplungsschleife (880) umfasst: Einen ersten Verstärker (824), welcher für das Verstärken des besagten Rückkopplungssignals (819) konfiguriert ist, einen Filter (828), welcher für das Filtern eines Ausgangssignals des besagten ersten Verstärkers (824) bei einer ersten vorbestimmten Frequenz konfiguriert ist, um ein Rückkopplungs-Dithersignal zu erhalten, wobei die besagte erste vorbestimmte Frequenz vorzugsweise eine Frequenz des besagten Vorspannungs-Dithersignals (BIAS DITHER) der besagten Vorspannungs-Ditherschaltung (860) oder, im Fall der einzelne Ditherschaltung (948), eine Frequenz des besagten Dithersignals (DITHER) der besagten einzelnen Ditherschaltung (948) ist; einen zweiten Verstärker (832), welcher für das Verstärken des besagten Rückkopplungs-Dithersignals konfiguriert ist; einen Synchrondetektor (836), welcher für das Korrigieren eines Ausgangssignals des besagten zweiten Verstärkers (832) in ein Gleichstrom-Ausgangssignal konfiguriert ist; und einen RF-Fehlerverstärker (840), welcher für das Verstärken und das Filtern des besagten Gleichstrom-Ausgangssignals konfiguriert ist, um ein Verstärkungssteuersignal an den besagten Verstärkungseingang des besagten RF-Eingangsverstärkers (847) bereitzustellen.

10. System (800, 1000) nach Anspruch 9, wobei die besagte RF-Rückkopplungsschleife (880) weiterhin einen Sockewertspannungseingang (895) in den besagten RF-Fehlerverstärker (840) umfasst.

11. System (800, 1000) nach Anspruch 9, wobei der besagte Synchrondetektor weiterhin einen Operationsverstärker und einen Analogschalter umfasst.

12. System (800, 1000) nach Anspruch 11, wobei der besagte Operationsverstärker entweder ein invertierender oder ein nichtinvertierender Verstärker in Synchronisation mit a) dem besagten Vorspannungs-Dithersignal (BIAS DITHER) oder, im Fall der einzelnen Ditherschaltung (948), b) dem besagten Dithersignal (DITHER) ist.

13. System (800, 1000) nach einem der vorstehenden Ansprüche, wobei die besagte Vorspannungsrückkopplungsschleife (870) umfasst: Einen ersten Vorspannungsverstärker (826), welcher für das Verstärken des besagten Rückkopplungssignals (819) konfiguriert ist, einen Filter (830), welcher für das Filtern eines Ausgangssignals des besagten ersten Vorspannungsverstärkers (826) bei einer zweiten vorbestimmten Frequenz konfiguriert ist, um ein Vorspannungsausgangs-Dithersignal zu erhalten, wobei die besagte zweite vorbestimmte Frequenz vorzugsweise eine Frequenz des besagten RF-Dithersignals (RF DITHER) der besagten RF-Amplituden-Ditherschaltung (848) oder, im Fall der einzelnen Ditherschaltung (948), eine Frequenz des besagten Dithersignals (DITHER) der besagten einzelnen Ditherschaltung (948) ist; einen zweiten Vorspannungsverstärker (834), welcher für das Verstärken des besagten Vorspannungsausgangs-Dithersignals konfiguriert ist; einen Synchrondetektor (838), welcher für das Korrigieren des besagten verstärkten Vorspannungsausgangs-Dithersignals in ein Gleichstrom-Ausgangssignal konfiguriert ist; und einen Vorspannungs-Fehlerverstärker (842), welcher für das Verstärken und das Filtern des besagten Gleichstrom-Ausgangssignals des Synchrondetektors (838) konfiguriert ist, um eine Bias-Eingangsspannung an den besagten Modulator (814) bereitzustellen.

14. System (800, 1000) nach Anspruch 13, wobei der besagte Synchrondetektor (838) der Vorspannungsrückkopplungsschleife (870) einen Operationsverstärker und einen Analogschalter umfasst.

15. System (800, 1000) nach Anspruch 14, wobei der besagte Operationsverstärker entweder ein invertierender oder ein nichtinvertierender Verstärker in Synchronisation mit a) dem besagten RF-Amplituden-Dithersignal (RF DITHER) oder, im Fall der einzelnen Ditherschaltung (948), b) dem besagten Dithersignal (DITHER) ist.

16. System (800, 1000) nach einem der vorstehenden Ansprüche, wobei das besagte System (800, 1000) mindestens entweder den besagten Laser (812), den besagten Modulator (814) oder den besagten RF-Verstärker (847) umfasst.

17. System (800, 1000) nach einem der vorstehenden Ansprüche, wobei der besagte Modulator (814) ein Mach-Zehnder-Modulator ist.

18. System (800, 1000) nach einem der vorstehenden Ansprüche, wobei die besagte RF-Rückkopplungsschleife (880) und die besagte Vorspannungsrückkopplungsschleife (870) dafür konfiguriert sind, sich automatisch anzupassen, um Vorspannung- und RF-Amplitudenwerte im Zeitablauf und bei physikalischen Änderungen zu korrigieren.

19. Verfahren zum Betreiben eines Systems (800) zur robusten Steuerung des Vorspannungspunktes (20) und des Funkfrequenz- bzw. RF-Amplitudenpegels eines Modulators (814) für einen optischen Sender, wobei der besagte Modulator (814) einen RF-Eingangsport (820) für den Empfang eines RF-Datensignals (RF) von einem RF-Verstärker (847) und einen Vorspannungs-Eingangsport (822) für den Empfang eines Vorspannungssignals (BIAS) umfasst, wobei der besagte Modulator (814) dafür konfiguriert ist, Laserlicht von einem Laser (812) zu empfangen und das besagte Laserlicht auf der Basis des besagten RF-Datensignals (RF) und des besagten Vorspannungssignals (BIAS) zu modulieren, wodurch ein moduliertes Signal (815) erhalten wird, wobei das besagte Verfahren die folgenden Schritte umfasst:
Aufspalten, anhand eines Splitters (816), des besagten modulierten Signals (815) in ein optisches Senderausgangssignal (890) und eine Dither-Ausgangssignalkomponente (891),
Konvertieren, anhand einer Fotodiode (818), der Dither-Ausgangssignalkomponente (891), um ein Rückkopplungssignal (819) bereitzustellen,
Bereitstellen, anhand einer RF-Amplituden-Ditherschaltung (848), eines RF-Amplituden-Dithersignals (RF DITHER) an einen Verstärkungseingang des besagten RF-Eingangsverstärkers (847),
Bereitstellen, anhand einer Vorspannungs-Ditherschaltung (860), eines Vorspannungs-Dithersignals (BLAS DITHER) an den Vorspannungs-Eingangsport (822) des besagten Modulators (814),
Steuern, anhand einer Vorspannungsrückkopplungsschleife (870), einer Bias-Eingangsspannung in den besagten Vorspannungs-Eingangsport (822) des besagten Modulators (847) in Abhängigkeit von dem besagten Rückkopplungssignal (819),
Steuern, anhand einer RF-Rückkopplungsschleife (880), eines Verstärkungssteuereingangs (GAIN) in den besagten Verstärkungseingang des besagten RF-Eingangsverstärkers (847) in Abhängigkeit von dem besagten Rückkopplungssignal (819), wobei das besagte Verfahren dafür konfiguriert ist, ein RF-Amplituden-Dithering anhand der besagten RF-Amplituden-Ditherschaltung (848) durchzuführen, um eine Vorspannung des besagten Modulators (814) zu steuern, und ein Vorspannungs-Dithering anhand der besagten Vorspannungs-Ditherschaltung (860) durchzuführen, um eine RF-Amplitude des besagten RF-Datensignals (RF) zu steuern.

20. Verfahren nach Anspruch 19, wobei das besagte Vorspannungs-Dithersignal (BIAS DITHER) und das besagte RF-Dithersignal (RF DITHER) derart in einem Verhältnis zueinander stehen, dass das eine die halbe Frequenz des anderen ist.

21. Verfahren nach einem der Ansprüche 19 bis 20, wobei das besagte Vorspannung-Dithersignal (BIAS DITHER) bei 250 Hertz und das besagte RF-Dithersignal (RF DITHER) bei 500 Hertz liegt.

22. Verfahren nach einem der Ansprüche 19 bis 21, wobei keine Frequenzkomponenten des besagten RF-Dithersignals (RF DITHER) und des besagten Vorspannungs-Dithersignals (BIAS DITHER) bestehen, die sich überlappen.

23. Verfahren zum Betreiben eines Systems (800) zur robusten Steuerung des Vorspannungspunktes (20) und des Funkfrequenz- bzw. RF-Amplitudenpegels eines Modulators (814) für einen optischen Sender, wobei der besagte Modulator (814) einen RF-Eingangsport (820) für den Empfang eines RF-Datensignals (RF) von einem RF-Verstärker (847) und einen Vorspannungs-Eingangsport (822) für den Empfang eines Vorspannungssignals (BIAS) umfasst, wobei der besagte Modulator (814) dafür konfiguriert ist, Laserlicht von einem Laser (812) zu empfangen und das besagte Laserlicht auf der Basis des besagten RF-datensignals (RF) und des besagten Vorspannungssignals (BIAS) zu modulieren, wodurch ein moduliertes Signal (815) erhalten wird, wobei das Verfahren die folgenden Schritte umfasst:
Aufspalten, anhand eines Splitters (816), des besagten modulierten Signals (815) in ein optisches Senderausgangssignal (890) und eine Dither-Ausgangssignalkomponente (891),
Konvertieren, anhand einer Fotodiode (818), der Dither-Ausgangssignalkomponente (891), um ein Rückkopplungssignal (819) bereitzustellen,
selektives Bereitstellen, anhand eines ersten Wählschalters (1020), des besagten Rückkopplungssignals (819) an eine Vorspannungsrückkopplungsschleife (870) oder an eine RF-Rückkopplungsschleife (880),
Bereitstellen, anhand einer einzelnen Ditherschaltung (948), eines Dithersignals (DITHER), vorzugsweise mit einer beliebigen ausgewählten Frequenz,
selektives Bereitstellen, anhand eines zweiten Wahlschalter (1030), des besagten Dithersignals (DITHER) der einzelnen Ditherschaltung (948) an einen Verstärkungseingang des besagten RF-Eingangsverstärkers (847) oder an den Vorspannungs-Eingangsport (822) des besagten Modulators (814),
wobei der besagte erste und der besagte zweite Wahlschalter (1020, 1030) auseinander abgestimmt sind, so dass, wenn ein Wahlschalter offen ist, der andere geschlossen ist, und umgekehrt,
wobei die besagte Vorspannungsrückkopplungsschleife (870) eine Bias-Eingangsspannung in den besagten Vorspannungs-Eingangsport (822) des besagten Modulators (847) in Abhängigkeit von der besagten Dither-Ausgangssignalkomponente (819) steuert,
wobei die besagte RF-Rückkopplungsschleife (880) einen Verstärkungssteuereingang (GAIN) in den besagten Verstärkungseingang des besagten RF-Eingangsverstärkers (847) in Abhängigkeit von der besagten Dither-Ausgangssignalkomponente (819) steuert.

24. Verfahren nach Anspruch 23, wobei das besagte System (1000) die besagten Wahlschalter (1020, 1030) derart betreibt, dass a) wenn der erste Wahlschalter (1020) einen Ausgang der Fotodiode (818) an die RF-Rückkopplungsschleife (880) anschließt, der zweiten Wahlschalter (1030) einen Ausgang der einzelnen Ditherschaltung (948) an den besagten Vorspannungs-Eingangsport (822) des besagten Modulators (814) anschließt, und dass b) wenn der erste Wählschalter (1020) einen Ausgang der Fotodiode (818) an die Vorspannungsrückkopplungsschleife (870) anschließt, der zweite Wahlschalter (1030) einen Ausgang der einzelnen Ditherschaltung (948) an den besagten Verstärkungseingang des besagten RF-Eingangsverstärkers (847) anschließt.

25. Verfahren nach einem der Ansprüche 23 oder 24, wobei das besagte System (1000) ein Schalten der besagten Wahlschalter (1020, 1030) bei einer Rate von etwa 10 Hz bis 30 Hz durchführt.

26. Verfahren nach einem der Ansprüche 23 bis 25, wobei das besagte System (1000) eine Schaltung der besagten Wahlschalter (1020, 1030) mit einer 25%/75%-Aufteilung durchführt, so dass das Dithersignal (DITHER) während 25% der Zeit in den besagten Verstärkungseingang des besagten RF-Eingangsverstärkers (847) eingegeben wird, und das Dithersignal (DITHER) während 75% der Zeit in den Vorspannungs-Eingangsport (822) des besagten Modulators (814) eingegeben wird.

27. Verfahren nach einem der vorstehenden Ansprüche 19 bis 26, wobei die besagte RF-Rückkopplungsschleife (880) umfasst: Einen ersten Verstärker (824), welcher das besagte Rückkopplungssignal (819) verstärkt, einen Filter (828), welcher ein Ausgangssignal des besagten ersten Verstärkers (824) bei einer ersten vorbestimmten Frequenz filtert, um ein Rückkopplungs-Dithersignal zu erhalten, wobei die besagte erste vorbestimmte Frequenz vorzugsweise eine Frequenz des besagten Vorspannungs-Dithersignals (BIAS DITHER) der besagten Vorspannungs-Ditherschaltung (860) oder, im Fall der einzelnen Ditherschaltung (948), eine Frequenz des besagten Dithersignals (DITHER) der besagten einzelnen Ditherschaltung (948) ist; einen zweiten Verstärker (832), welcher das besagte Rückkopplungs-Dithersignal verstärkt; einen Synchrondetektor (836), welcher ein Ausgangssignal des besagten zweiten Verstärkers (832) in ein Gleichstrom-Ausgangssignal korrigiert; und einen RF-Fehlerverstärker (840), welcher das besagte Gleichstrom-Ausgangssignals verstärkt und filtert, um ein Verstärkungssteuersignal an den besagten Verstärkungseingang des besagten RF-Eingangsverstärkers (847) bereitzustellen.

28. Verfahren nach Anspruch 27, wobei der besagte Synchrondetektor (836) weiterhin einen Operationsverstärker und einen Analogschalter umfasst, wobei der besagte Operationsverstärker entweder ein invertierender oder ein nacht invertierender Verstärker ist, welcher in Synchronisation mit a) dem besagten Vorspannungs-Dithersignal (BIAS DITHER) oder, im Fall der einzelnen Ditherschaltung (948), b) dem besagten Dithersignal (DITHER) arbeitet.

29. Verfahren nach einem der Ansprüche 19 bis 28, wobei die besagte Vorspannungsrückkopplungsschleife (870) umfasst: Einen ersten Vorspannungsverstärker (826), welcher das besagte Rückkopplungssignal (819) verstärkt, einen Filter (830), welcher ein Ausgangssignal des besagten ersten Vorspannungsverstärkers (826) bei einer zweiten vorbestimmten Frequenz filtert, um ein Vorspannungsausgangs-Dithersignal zu erhalten, wobei die besagte zweite vorbestimmte Frequenz vorzugsweise eine Frequenz des besagten RF-Dithersignals (RF DITHER) der besagten RF-Amplituden-Ditherschaltung (848) oder, im Fall der einzelnen Ditherschaltung (948), eine Frequenz des besagten Dithersignals (DITHER) der besagten einzelnen Ditherschaltung (948) ist, einen zweiten Vorspannungsverstärker (834), welcher das besagte Vorspannungsausgangs-Dithersignal verstärkt, einen Synchrondetektor (838), welcher das besagte verstärkte Vorspannungsausgangs-Dithersignal in ein DC-Ausgangssignal korrigiert, und einen Vorspannungs-Fehlerverstärker (842), welcher das besagte Gleichspannungs-Ausgangssignal des Synchrondetektors (838) verstärkt und filtert, um eine Bias-Eingangsspannung an den besagten Modulator (814) bereitzustellen.

30. Verfahren nach Anspruch 29, wobei der besagte Synchrondetektor (838) der Vorspannungsrückkopplungsschleife (870) einen Operationsverstärker und einen Analogschalter umfasst, wobei der besagte Operationsverstärker entweder ein invertierender oder ein nichtinvertierender Verstärker ist und in Synchronisation mit a) dem besagten RF-Amplituden-Dithersignal (RF DITHER) oder, im Fall der einzelnen Ditherschaltung (948), b) dem besagten Dithersignal (DITHER) arbeitet.

31. Verfahren nach einem der Ansprüche 19 bis 30, wobei das besagte System (800, 1000) mindestens entweder den besagten Laser (812), den besagten Modulator (814) oder den besagten RF-Verstärker (847) umfasst.

32. Verfahren nach einem der Ansprüche 19 bis 31, wobei das besagte System (800, 1000) ein RF-Amplituden-Dithering anhand der besagten RF-Amplituden-Ditherschaltung (848) durchführt, um eine Vorspannung des besagten Modulators (814) zu steuern, und ein Vorspannungs-Dithering anhand der besagten Vorspannungs-Ditherschaltung (860) durchführt, um eine RF-Amplitude des besagten RF-Datensignals (RF) zu steuern.

33. Verfahren nach einem der Ansprüche 19 bit 32, wobei der besagte Modulator (814) ein Mach-Zehnder-Modulator ist.

34. Verfahren nach einem der Ansprüche 19 bis 33, wobei sich die besagte RF-Rückkopplungsschleife (880) und die besagte Vorspannungsrückkopplungsschleife (870) automatisch anpassen, um Vorspannungs- und RF-Amplitudenwerte im Zeitablauf und bei physikalischen Änderungen zu korrigieren.

35. Verfahren nach einem der Ansprüche 19 bis 34, wobei der besagte Laser (812) mit einem konstanten Eingangsstrom betrieben wird.

## Revendications

1. Système (800) de commande consolidée du point de polarisation (20) et du niveau d'amplitude RF, radiofréquence, d'un modulateur (814) pour un émetteur optique, système avec lequel ledit modulateur (814) comprend un port d'entrée RF (820) pour recevoir un signal de données RF (RF) de la part d'un amplificateur RF (847) et un port d'entrée de polarisation (822) pour recevoir un signal de polarisation (BIAS), ledit modulateur (814) étant configuré pour recevoir de la lumière laser de la part d'un laser (812) et pour moduler ladite lumière laser en fonction dudit signal de données RF (RF) et dudit signal de polarisation (BIAS), un signal modulé (815) étant ainsi obtenu, ledit système (800) comprenant :
un diviseur (816) pour diviser ledit signal modulé (815) en un signal de sortie optique d'émetteur (890) et une composante de signal de superposition de sortie (891),
une photodiode (818) qui convertit la composante de signal de superposition de sortie (891) pour délivrer un signal de rétroaction (819),
un circuit de superposition d'amplitude RF (848) configuré pour délivrer un signal de superposition d'amplitude RF (RF DITHER) à une entrée de gain dudit amplificateur d'entrée RF (847),
un circuit de superposition de polarisation (860) configuré pour délivrer un signal de superposition de polarisation (BIAS DITHER) au port d'entrée de polarisation (822) dudit modulateur (814),
une boucle de rétroaction de polarisation (870), ladite boucle de rétroaction de polarisation (870) étant configurée pour commander une tension d'entrée de polarisation vers ledit port d'entrée de polarisation (822) dudit modulateur (847) en fonction dudit signal de rétroaction (819),
une boucle de rétroaction RF (880), ladite boucle de rétroaction RF (880) étant configurée pour commander une entrée de commande de gain (GAIN) vers ladite entrée de gain dudit amplificateur d'entrée RF (847) en fonction dudit signal de rétroaction (819), ledit système étant configuré pour effectuer une superposition d'amplitude RF au moyen dudit circuit de superposition d'amplitude RF (848) pour commander une polarisation dudit modulateur (814), et pour effectuer une superposition de polarisation au moyen dudit circuit de superposition de polarisation (860) pour commander une amplitude RF dudit signal de données RF (RF),

2. Système (800) selon la revendication 1, avec lequel ledit signal de superposition de polarisation (BIAS DITHER) et ledit signal de superposition RF (RF DITHER) se trouvent dans une relation dans laquelle l'un est à la moitié de la fréquence de l'autre.

3. Système (800) selon la revendication 1, avec lequel ledit signal de superposition de polarisation (BIAS DITHER) est à 250 Hertz et ledit signal de superposition RF (RF DITHER) est à 500 Hertz.

4. Système (800) selon la revendication 1, avec lequel il n'existe aucune composante dudit signal de superposition RF (RF DITHER) et dudit signal de superposition de polarisation (BIAS DITHER) qui se chevauchent.

5. Système (1000) de commande consolidée du point de polarisation (20) et du niveau d'amplitude RF, radiofréquence, d'un modulateur (814) pour un émetteur optique, système avec lequel ledit modulateur (814) comprend un port d'entrée RF (820) pour recevoir un signal de données RF (RF) de la part d'un amplificateur RF (847) et un port d'entrée de polarisation (822) pour recevoir un signal de polarisation (BIAS), ledit modulateur (814) étant configuré pour recevoir de la lumière laser de la part d'un laser (812) et pour moduler ladite lumière laser en fonction dudit signal de données RF (RF) et dudit signal de polarisation (BIAS), un signal modulé (815) étant ainsi obtenu, ledit système (1000) comprenant :
un diviseur (816) pour diviser ledit signal modulé (815) en un signal de sortie optique d'émetteur (890) et une composante de signal de superposition de sortie (891),
une photodiode (818) qui convertit la composante de signal de superposition de sortie (891) pour délivrer un signal de rétroaction (819),
une boucle de rétroaction de polarisation (870),
une boucle de rétroaction RF (880),
un premier commutateur de sélection (1020) configuré pour délivrer de manière sélective ledit signal de rétroaction (819) à ladite boucle de rétroaction de polarisation (870) ou à ladite boucle de rétroaction RF (880),
un circuit de superposition unique (948) configuré pour délivrer un signal de superposition (DITHER)), de préférence à toute fréquence sélectionnée,
un deuxième commutateur de sélection (1030) configuré pour délivrer de manière sélective ledit signal de superposition (DITHER) du circuit de superposition unique (948) à une entrée de gain dudit amplificateur d'entrée RF (847) ou au port d'entrée de polarisation (822) dudit modulateur (814),
lesdits premier et deuxième commutateurs de sélection (1020, 1030) étant synchronisés l'un avec l'autre de telle sorte que lorsqu'un commutateur de sélection est ouvert, l'autre est fermé, et vice-versa,
ladite boucle de rétroaction de polarisation (870) étant configurée pour commander une tension d'entrée de polarisation vers ledit port d'entrée de polarisation (822) dudit modulateur (847) en fonction de ladite composante de signal de superposition de sortie (819),
ladite boucle de rétroaction RF (880) étant configurée pour commander une entrée de commande de gain (GAIN) vers ladite entrée de gain dudit amplificateur d'entrée RF (847) en fonction de ladite composante de signal de superposition de sortie (819).

6. Système (1000) selon la revendication 5, avec lequel ledit système est configuré pour faire fonctionner lesdits commutateurs de sélection (1020, 1030) de telle sorte que a) si le premier commutateur de sélection (1020) connecte une sortie de la photodiode (818) à la boucle de rétroaction RF (880), le deuxième commutateur de sélection (1030) connecte une sortie du circuit de superposition unique (948) audit port d'entrée de polarisation (822) dudit modulateur (814), et que b) si le premier commutateur de sélection (1020) connecte une sortie de la photodiode (818) à la boucle de rétroaction de polarisation (870), le deuxième commutateur de sélection (1030) connecte une sortie du circuit de superposition unique (948) à ladite entrée de gain dudit amplificateur d'entrée RF (847).

7. Système (1000) selon la revendication 5 ou 6, avec lequel ledit système (1000) est configuré pour effectuer une commutation desdits commutateurs de sélection (1020, 1030) à une cadence d'environ 10 Hz à 30 Hz.

8. Système (1000) selon l'une des revendications 5 à 7, avec lequel ledit système (1000) est configuré pour effectuer une commutation desdits commutateurs de sélection (1020, 1030) avec une division de 25 %/75 % de sorte que pendant 25 % du temps, le signal de superposition (DITHER) est appliqué à ladite entrée de gain dudit amplificateur d'entrée RF (847) et pendant 75 % du temps, le signal de superposition (DITHER) est appliqué au port d'entrée de polarisation (822) dudit modulateur (814).

9. Système (800, 1000) selon l'une des revendications précédentes, avec lequel ladite boucle de rétroaction RF (880) comprend : un premier amplificateur (824) configuré pour amplifier ledit signal de rétroaction (819), un filtre (828) configuré pour filtrer un signal de sortie dudit premier amplificateur (824) à une première fréquence prédéterminée pour obtenir un signal de superposition de rétroaction, ladite première fréquence prédéterminée étant de préférence une fréquence dudit signal de superposition de polarisation (BIAS DITHER) dudit circuit de superposition de polarisation (860) ou, dans le cas du circuit de superposition unique (948), une fréquence dudit signal de superposition (DITHER) dudit circuit de superposition unique (948), un deuxième amplificateur (832) configuré pour amplifier ledit signal de superposition de rétroaction, un détecteur synchrone (836) configuré pour redresser un signal de sortie dudit deuxième amplificateur (832) en un signal de sortie DC, et un amplificateur d'erreur RF (840) configuré pour amplifier et filtrer ledit signal de sortie DC pour délivrer un signal de commande de gain à ladite entrée de gain dudit amplificateur d'entrée RF (847).

10. Système (800, 1000) selon la revendication 9, avec lequel ladite boucle de rétroaction RF (880) comprend en outre une entrée de tension de palier (895) dans ledit amplificateur d'erreur RF (840).

11. Système (800, 1000) selon la revendication 9, avec lequel ledit détecteur synchrone comprend en outre un amplificateur opérationnel et un commutateur analogique.

12. Système (800, 1000) selon la revendication 11, avec lequel ledit amplificateur opérationnel est un amplificateur opérationnel soit inverseur, soit non-inverseur en Synchronisation avec a) ledit signal de superposition de polarisation (BIAS DITHER) ou, dans le cas du circuit de superposition unique (948), b) ledit signal de superposition (DITHER)).

13. Système (800, 1000) selon l'une des revendications précédentes, avec lequel ladite boucle de rétroaction de polarisation (870) comprend : un premier amplificateur de polarisation (826) configuré pour amplifier ledit signal de rétroaction (819), un filtre (830) configuré pour filtrer un signal de sortie dudit premier amplificateur de polarisation (826) à une deuxième fréquence prédéterminée pour obtenir un signal de superposition de sortie de polarisation, ladite deuxième fréquence prédéterminée étant de préférence une fréquence dudit signal de superposition RF (RF DITHER) dudit circuit de superposition d'amplitude RF (848) ou, dans le cas du circuit de superposition unique (948), une fréquence dudit signal de superposition (DITHER) dudit circuit de superposition unique (948), un deuxième amplificateur de polarisation (834) configuré pour amplifier ledit signal de superposition de sortie de polarisation, un détecteur synchrone (838) configuré pour redresser ledit signal de superposition de sortie de polarisation amplifié en un signal de sortie DC, et un amplificateur d'erreur de polarisation (842) configuré pour amplifier et filtrer ledit signal de sortie DC du détecteur synchrone (838) afin de délivrer une tension d'entrée de polarisation audit modulateur (814).

14. Système (800, 1000) selon la revendication 13, avec lequel ledit détecteur synchrone (838) de la boucle de rétroaction (870) comprend un amplificateur opérationnel et un commutateur analogique,

15. Système (800, 1000) selon la revendication 14, avec lequel ledit amplificateur opérationnel est un amplificateur opérationnel soit inverseur, soit non-inverseur en Synchronisation avec a) ledit signal de superposition d'amplitude RF (RF DITHER) ou, dans le cas du circuit de superposition unique (948), b) ledit signal de superposition (DITHER).

16. Système (800, 1000) selon l'une des revendications précédentes, avec lequel ledit système (800, 1000) comprend au moins l'un des éléments suivants: ledit laser (812), ledit modulateur (814), ledit amplificateur RF (847).

17. Système (800, 1000) selon l'une des revendications précédentes, avec lequel ledit modulateur (814) est un modulateur de Mach-Zehnder.

18. Système (800, 1000) selon l'une des revendications précédentes, avec lequel ladite boucle de rétroaction RF (880) et ladite boucle de rétroaction de polarisation (870) sont toutes deux configurées pour ajuster automatiquement les valeurs correctes de la polarisation et de l'amplitude RF en fonction du temps et des changements physiques.

19. Procédé d'exploitation d'un système (800) de commande consolidée du point de polarisation (20) et du niveau d'amplitude RF, radiofréquence, d'un modulateur (814) pour un émetteur optique, procédé selon lequel ledit modulateur (814) comprend un port d'entrée RF (820) pour recevoir un signal de données RF (RF) de la part d'un amplificateur RF (847) et un port d'entrée de polarisation (822) pour recevoir un signal de polarisation (BIAS), ledit modulateur (814) étant configuré pour recevoir de la lumière laser de la part d'un laser (812) et pour moduler ladite lumière laser en fonction dudit signal de données RF (RF) et dudit signal de polarisation (BIAS), un signal modulé (815) étant ainsi obtenu, ledit procédé comprenant les étapes suivantes :
division, au moyen d'un diviser (816), dudit signal modulé (815) en un signal de sortie optique d'émetteur (890) et une composante de signal de superposition de sortie (891),
conversion, au moyen d'une photodiode (818), de la composante de signal de superposition de sortie (891) pour délivrer un signal de rétroaction (819),
délivrance, au moyen d'un circuit de superposition d'amplitude RF (848), d'un signal de superposition d'amplitude RF (RF DITHER) à une entrée de gain dudit amplificateur d'entrée RF (847),
délivrance, au moyen d'un circuit de superposition de polarisation (860), d'un signal de superposition de polarisation (BIAS DITHER) au port d'entrée de polarisation (822) dudit modulateur (814),
commande, au moyen d'une boucle de rétroaction de polarisation (870), d'une tension d'entrée de polarisation vers ledit port d'entrée de polarisation (822) dudit modulateur (847) en fonction dudit signal de rétroaction (819),
commande, au moyen d'une boucle de rétroaction RF (880), d'une entrée de commande de gain (GAIN) vers ladite entrée de gain dudit amplificateur d'entrée RF (847) en fonction dudit signal de rétroaction (819), ledit procédé étant configuré pour effectuer une superposition d'amplitude RF au moyen dudit circuit de superposition d'amplitude RF (848) pour commander une polarisation dudit modulateur (814), et pour effectuer une superposition de polarisation au moyen dudit circuit de superposition de polarisation (860) pour commander une amplitude RF dudit signal de données RF (RF).

20. Procédé selon la revendication 19, selon lequel ledit signal de superposition de polarisation (BIAS DITHER) et ledit signal de superposition RF (RF DITHER) se trouvent dans une relation dans laquelle l'un est à la moitié de la fréquence de l'autre.

21. Procédé selon l'une des revendications 19 à 20, selon lequel ledit signal de superposition de polarisation (BIAS DITHER) est à 250 Hertz et ledit signal de superposition RF (RF DITHER) est à 500 Hertz.

22. Procédé selon l'une des revendications 19 à 21, selon lequel il n'existe aucune composante dudit signal, de superposition RF (RF DITHER) et dudit signal de superposition de polarisation (BIAS DITHER) qui se chevauchant.

23. Procédé d'exploitation d'un système (800) de commande consolidée du point de polarisation (20) et du niveau d'amplitude RF, radiofréquence, d'un modulateur (814) pour un émetteur optique, procédé selon lequel ledit modulateur (814) comprend un port d'entrée RF (820) pour recevoir un signal de données RF (RF) de la part d'un amplificateur RF (847) et un port d'entrée de polarisation (822) pour recevoir un signal de polarisation (BIAS), ledit modulateur (814) étant configuré pour recevoir de la lumière laser de la part d'un laser (812) et pour moduler ladite lumière laser en fonction dudit signal de données RF (RF) et dudit signal de polarisation (BIAS), un signal modulé (815) étant ainsi obtenu, ledit procédé comprenant les étapes suivantes :
conversion, au moyen d'une photodiode (818), de la composante de signal de superposition de sortie (891) pour délivrer un signal de rétroaction (819),
délivrance sélective, au moyen d'un premier commutateur de sélection (1020), dudit signal de rétroaction (819) à une boucle de rétroaction de polarisation (870) ou à une boucle de rétroaction RF (880),
délivrance, au moyen d'un circuit de superposition unique (948), d'un signal de superposition (DITHER)), de préférence à toute fréquence sélectionnée,
délivrance sélective, au moyen d'un deuxième commutateur de sélection (1030), dudit signal de superposition (DITHER) du circuit de superposition unique (948) à une entrée de gain dudit amplificateur d'entrée RF (847) ou au port d'entrée de polarisation (822) dudit modulateur (814),
lesdits premier et deuxième commutateurs de sélection (1020, 1030) étant synchronisés l'un avec l'autre de telle sorte que lorsqu'un commutateur de sélection est ouvert, l'autre est fermé, et vice-versa,
ladite boucle de rétroaction de polarisation (870) commandant une tension d'entrée de polarisation vers ledit port d'entrée de polarisation (822) dudit modulateur (847) en fonction de ladite composante de signal de superposition de sortie (819),
ladite boucle de rétroaction RF (880) commandant une entrée de commande de gain (GAIN) vers ladite entrée de gain dudit amplificateur d'entrée RF (847) en fonction de ladite composante de signal de superposition de sortie (819).

24. Procédé selon la revendication 23, selon lequel ledit système (1000) fait fonctionner lesdits commutateurs de sélection (1020, 1030) de telle sorte que a) si le premier commutateur de sélection (1020) connecte une sortie de la photodiode (818) à la boucle de rétroaction RF (880), le deuxième commutateur de sélection (1030) connecte une sortie du circuit de superposition unique (948) audit port d'entrée de polarisation (822) dudit modulateur (814), et que b) si le premier commutateur de sélection (1020) connecte une sortie de la photodiode (818) à la boucle de rétroaction de polarisation (870), le deuxième commutateur de sélection (1030) connecte une sortie du circuit de superposition unique (948) à ladite entrée de gain dudit amplificateur d'entrée RF (847).

25. Procédé selon l'une des revendications 23 ou 24, selon lequel ledit système (1000) effectue une commutation desdits commutateurs de sélection (1020, 1030) à une cadence d'environ 10 Hz à 30 Hz.

26. Procédé selon l'une des revendications 23 à 25, selon lequel ledit système (1000) effectue une commutation desdits commutateurs de sélection (1020, 1030) avec une division de 25 %/75 % de sorte que pendant 25 % du temps, le signal de superposition (DITHER) est appliqué à ladite entrée de gain dudit amplificateur d'entrée RF (847) et pendant 75 % du temps, le signal de superposition (DITHER) est appliqué au port d'entrée de polarisation (822) dudit modulateur (814).

27. Procédé selon l'une des revendications 19 à 26, selon lequel ladite boucle de rétroaction RF (880) comprend : un premier amplificateur (824) qui amplifie ledit signal de rétroaction (819), un filtre (828) qui filtre un signal de sortie dudit premier amplificateur (824) à une première fréquence prédéterminée pour obtenir un signal de superposition de rétroaction, ladite première fréquence prédéterminée étant de préférence une fréquence dudit signal de superposition de polarisation (BIAS DITHER) dudit circuit de superposition de polarisation (860) ou, dans le cas du circuit de superposition unique (948), une fréquence dudit signal de superposition (DITHER) dudit circuit de superposition unique (948), un deuxième amplificateur (832) qui amplifie ledit signal de superposition de rétroaction, un détecteur synchrone (836) qui redresse un signal de sortie dudit deuxième amplificateur (832) en un signal de sortie DC, et un amplificateur d'erreur RF (840) qui amplifie et filtre ledit signal de sortie DC pour délivrer un signal de commande de gain à ladite entrée de gain dudit amplificateur d'entrée RF (847).

28. Procédé selon la revendication 27, selon lequel ledit détecteur synchrone (838) comprend en outre un amplificateur opérationnel et un commutateur analogique, ledit amplificateur opérationnel étant un amplificateur opérationnel soit inverseur, soit non inverseur, et fonctionnant en synchronisation avec a) ledit signal de superposition de polarisation (BIAS DITHER) ou, dans le cas du circuit de superposition unique (948), b) ledit signal de superposition (DITHER)).

29. Procédé selon l'une des revendications 19 à 28, selon lequel ladite boucle de rétroaction de polarisation (870) comprend : un premier amplificateur de polarisation (826) qui amplifie ledit signal de rétroaction (819), un filtre (830) qui filtre un signal de sortie dudit premier amplificateur de polarisation (826) à une deuxième fréquence prédéterminée pour obtenir un signal de superposition de sortie de polarisation, ladite deuxième fréquence prédéterminée étant de préférence une fréquence dudit signal de superposition RF (RF DITHER) dudit circuit de superposition d'amplitude RF (848) ou, dans le cas du circuit de superposition unique (948), une fréquence dudit signal de superposition (DITHER) dudit circuit de superposition unique (948), un deuxième amplificateur de polarisation (834) qui amplifie ledit signal de superposition de sortie de polarisation, un détecteur synchrone (838) qui redresse ledit signal de superposition de sortie de polarisation amplifié en un signal de sortie DC, et un amplificateur d'erreur de polarisation (842) qui amplifie et filtre ledit signal de sortie DC du détecteur synchrone (838) afin de délivrer une tension d'entrée de polarisation audit modulateur (814).

30. Procédé selon la revendication 29, selon lequel ledit détecteur synchrone (838) de la boucle de rétroaction de polarisation (870) comprend un amplificateur opérationnel et un commutateur analogique, ledit amplificateur opérationnel étant un amplificateur opérationnel soit inverseur, soit non inverseur, et fonctionnant en synchronization avec a) ledit signal de superposition d'amplitude RF (RF, DITHER) ou, dans le cas du circuit de superposition unique (948), b) ledit signal de superposition (DITHER).

31. Procédé selon l'une des revendications 19 à 30, selon lequel ledit système (800, 1000) comprend au moins l'un des éléments suivants : ledit laser (812), ledit modulateur (814), ledit amplificateur RF (847).

32. Procédé selon l'une des revendications 19 à 31, selon lequel ledit système effectue une superposition d'amplitude RF au moyen dudit circuit de superposition d'amplitude RF (848) pour commander une polarisation dudit modulateur (814), et effectue une superposition de polarisation au moyen dudit circuit de superposition de polarisation (860) pour commander une amplitude RF dudit signal de données RF(RF).

33. Procédé selon l'une des revendications 19 à 32, selon lequel ledit modulateur (814) est un modulateur de Mach-Zehnder,

34. Procédé selon l'une des revendications 19 à 33, selon lequel ladite boucle de rétroaction RF (880) et ladite boucle de rétroaction de polarisation (870) ajustent toutes deux automatiquement les valeurs correctes de la polarisation et de l'amplitude RF en fonction du temps et des changements physiques.

35. Procédé selon l'une des revendications 19 à 34, selon lequel ledit laser (812) fonctionne avec un courant d'entrée constant.
